# EUROPEAN PATENT APPLICATION

(11) **EP 4 708 814 A1**
(43) Date of publication of application: **11.03.2026**
(21) Application number: 24855572.4
(22) Date of filing: 30.07.2024
(51) Int. Cl.: H04L 65/80

(54) **MEDIA NEGOTIATION METHOD, APPARATUS AND SYSTEM**

(30) Priority: 18.08.2023 CN 202311052515
(71) Applicant: Huawei Technologies Co., Ltd., Shenzhen, Guangdong 518129 (CN)
(72) Inventor: JI, Mengdi, Shenzhen, Guangdong 518129 (CN); ZUO, Jun, Shenzhen, Guangdong 518129 (CN); HU, Xiaokun, Shenzhen, Guangdong 518129 (CN)
(74) Representative: Isarpatent
(86) International application number: PCT/CN2024/108431
(87) International publication number: WO 2025/039846

(57) **Abstract**

This application provides a media negotiation method, an apparatus, and a system, which may be applied to the field of IMS call technologies. The method may include: A framework layer sends first SDP offer information including first media description information to a second communication apparatus via an IMS network element. The first media description information is description information, offered by a first application, of a media resource of a first data channel for transmission of application data generated or consumed by the first application, and both the framework layer and the first application run on a first communication apparatus. The framework layer receives, via the IMS network element and from the second communication apparatus, first SDP answer information including second media description information. The second media description information is an answer to the first media description information. The framework layer sends the second media description information to the first application. In this solution, a media negotiation service for a data channel can be provided for an IMS DC application.

## Description

This application claims priority to Chinese Patent Application No. 202311052515.1, filed with the China National Intellectual Property Administration on August 18, 2023 and entitled "MEDIA NEGOTIATION METHOD, APPARATUS, AND SYSTEM", which is incorporated herein by reference in its entirety.

### TECHNICAL FIELD

This application relates to the communication field, and more specifically, to a media negotiation method, an apparatus, and a system.

### BACKGROUND

An internet protocol (internet protocol, IP) multimedia subsystem (IP multimedia subsystem, IMS) is a network architecture designed to provide multimedia communication services.

Within the IMS, an IMS data channel application (data channel application, DC App) can provide users with richer communication services in addition to voice and video calls. For example, the users can utilize the data channel application for various communication such as screen sharing, location sharing, and overlaying augmented reality (augmented reality, AR) effects.

Currently, although an IMS DC App running on a communication apparatus can generate session description protocol, (session description protocol, SDP) information through a WebRTC application programming interface (application programming interface, API), the IMS DC App cannot perform media negotiation on a data channel with an IMS DC App running on a peer communication apparatus. Therefore, how to provide a media negotiation service for the data channel to IMS DC Apps is an urgent problem to be resolved.

### SUMMARY

This application provides a media negotiation method, an apparatus, and a system, to provide a media negotiation service for a data channel for an IMS DC application.

According to a first aspect, a media negotiation method is provided. The method may be performed by a first communication apparatus, or may be performed by a component (for example, a chip or a circuit) of the first communication apparatus. For example, the first communication apparatus may be a first terminal device.

The method includes: A framework layer receives first media description information from a first application. The first media description information is description information, offered by the first application, of a media resource of a first data channel, the first data channel is a channel used for transmission of application data generated or consumed by the first application between the first communication apparatus and a second communication apparatus, and both the framework layer and the first application run on the first communication apparatus. The framework layer sends first SDP offer information to the second communication apparatus via an IMS network element. The first SDP offer information includes the first media description information. The framework layer receives first SDP answer information from the second communication apparatus via the IMS network element. The first SDP answer information includes second media description information, and the second media description information is an answer to the first media description information. The framework layer sends the second media description information to the first application. The framework layer includes an IMS component, and the first application is an IMS DC application.

According to the foregoing technical solution, the first application (IMS DC application) running on the first communication apparatus may send, to the framework layer/IMS component running on the first communication apparatus, the description information (first media description information) that is of the media resource of the first data channel and that is offered by the first application. The framework layer may send the first SDP offer information including the first media description information to the second communication apparatus. After receiving the first SDP offer information, the second communication apparatus may send the first SDP answer information including the second media description information to the framework layer. The second media description information is the answer of the second communication apparatus to the first media description information. In this way, a media negotiation service for the data channel can be provided for the IMS DC application.

With reference to the first aspect, in some implementations of the first aspect, the first SDP offer information further includes third media description information and/or fourth media description information, and the first SDP answer information further includes fifth media description information and/or sixth media description information. The third media description information is description information that is of a media resource of an audio channel and that is offered by the framework layer, and the audio channel is used for transmission of audio data of a call service of the first communication apparatus. The fourth media description information is description information, offered by the framework layer, of a media resource of a video channel, for transmission of video data of the call service of the first communication apparatus. The fifth media description information is an answer to the fifth media description information. The sixth media description information is an answer to the sixth media description information.

According to the foregoing solution, the framework layer running on the first communication apparatus may combine the description information (first media description information) of the media resource of the first data channel, the description information (third media description information) of the media resource of the audio channel, and/or the description information (fourth media description information) of the media resource of the video channel into the first SDP offer information, and send the first SDP offer information to the second communication apparatus. The second communication apparatus may also combine the second media description information, the fifth media description information, and/or the sixth media description information into the first SDP answer information, and send the first SDP answer information to the framework layer running on the first communication apparatus.

With reference to the first aspect, in some implementations of the first aspect, the first SDP offer information and the first SDP answer information each indicate a correspondence between the first application and the first data channel.

According to the foregoing solution, when one IMS session supports only one IMS DC application, and the second communication apparatus has not downloaded the first application, the first SDP offer information indicates the correspondence between the first application and the first data channel, so that the second communication apparatus can download the first application based on the correspondence between the first application and the first data channel. When one IMS session supports a plurality of IMS DC applications, the first SDP offer information indicates the correspondence between the first application and the first data channel, so that the second communication apparatus can learn of a specific application that uses the first data channel.

With reference to the first aspect, in some implementations of the first aspect, the first media description information and the second media description information each include a first attribute line and a second attribute line. The first attribute line includes parameter information of the first data channel, the parameter information includes an identifier of the first data channel, and the second attribute line includes an identifier of the first application and the identifier of the first data channel. Alternatively, the first media description information and the second media description information each include a third attribute line. The third attribute line includes parameter information of the first data channel and an identifier of the first application, and the parameter information includes an identifier of the first data channel.

With reference to the first aspect, in some implementations of the first aspect, the method further includes: The framework layer receives a first quality of service QoS parameter set from the first application. The first QoS parameter set includes at least one QoS parameter, offered by the first application, of the first data channel. The first SDP offer information further indicates a correspondence between the first QoS parameter set and the first media description information. The first SDP answer information further indicates a correspondence between a second QoS parameter set and the second media description information, and the second QoS parameter set is an answer of the second communication apparatus to the first QoS parameter set.

With reference to the first aspect, in some implementations of the first aspect, the first media description information includes the first QoS parameter set, and the second media description information includes the second QoS parameter set. According to the foregoing solution, the IMS DC application may be supported in specifying a QoS parameter of the DC.

With reference to the first aspect, in some implementations of the first aspect, the at least one QoS parameter includes a packet loss rate and a latency.

With reference to the first aspect, in some implementations of the first aspect, the method further includes: The framework layer further receives first indication information from the first application. The first indication information indicates that the first data channel uses an independent bearer.

With reference to the first aspect, in some implementations of the first aspect, the first media description information and seventh media description information are respectively included in a first m segment and a second m segment in the first SDP offer information. The seventh media description information is description information of a media resource of a second data channel, and the second data channel is a channel between the first communication apparatus and the second communication apparatus or between the first communication apparatus and a third communication apparatus for transmission of application data generated or consumed by the first application or a second application. The second media description information and eighth media description information are respectively included in a third m segment and a fourth m segment in the first SDP answer information. The eighth media description information is an answer to the seventh media description information.

For example, when the first SDP offer information further indicates the correspondence between the first QoS parameter set and the first media description information, the first media description information and the seventh media description information are respectively included in the first m segment and the second m segment in the first SDP offer information, and the second media description information and the eighth media description information are respectively included in the third m segment and the fourth m segment in the first SDP answer information. Alternatively, when the framework layer receives the first indication information from the first application, the first media description information and the seventh media description information are respectively included in the first m segment and the second m segment in the first SDP offer information, and the second media description information and the eighth media description information are respectively included in the third m segment and the fourth m segment in the first SDP answer information.

According to the foregoing solution, when the second data channel is for transmission of the application data generated or consumed by the second application between the first communication apparatus and the second communication apparatus, different IMS DC applications can share one IMS session context. When the second data channel is for transmission of the application data generated or consumed by the first application or the second application between the first communication apparatus and the third communication apparatus, a same communication apparatus can be supported in establishing data channels with a plurality of peer communication apparatuses in one IMS session context.

With reference to the first aspect, in some implementations of the first aspect, the first media description information and seventh media description information are included in a fifth m segment in the first SDP offer information. The seventh media description information is description information of a media resource of a second data channel, and the second data channel is a channel between the first communication apparatus and the second communication apparatus or between the first communication apparatus and a third communication apparatus for transmission of application data generated or consumed by the first application or a second application. The second media description information and eighth media description information are included in a sixth m segment in the first SDP answer information. The eighth media description information is an answer to the seventh media description information.

For example, when the first SDP offer information does not indicate the correspondence between the first QoS parameter set and the first media description information, and the framework layer does not receive the first indication information from the first application, the first media description information and the seventh media description information are included in the fifth m segment in the first SDP offer information, and the second media description information and the eighth media description information are included in the sixth m segment in the first SDP answer information.

According to the foregoing solution, when the second data channel is for transmission of the application data generated or consumed by the second application between the first communication apparatus and the second communication apparatus, different IMS DC applications can share one IMS session context. When the second data channel is for transmission of the application data generated or consumed by the first application or the second application between the first communication apparatus and the third communication apparatus, a same communication apparatus can be supported in establishing data channels with a plurality of peer communication apparatuses in one IMS session context.

With reference to the first aspect, in some implementations of the first aspect, the first communication apparatus is the first terminal device, and the second communication apparatus is a second terminal device or a server corresponding to the first application.

With reference to the first aspect, in some implementations of the first aspect, the IMS network element includes a proxy call session control function P-CSCF network element. The IMS network element is one or more IMS network elements in an IMS network.

According to a second aspect, a media negotiation method is provided. The method may be performed by a second communication apparatus, or may be performed by a component (for example, a chip or a circuit) of the second communication apparatus. For example, the second communication apparatus may be a second terminal device, or the second communication apparatus may be a server corresponding to a first application.

The communication method includes: A framework layer receives first SDP offer information from a first communication apparatus via an IMS network element. The first SDP offer information includes first media description information, the first media description information is description information of a media resource of a first data channel, the first data channel is a channel used for transmission of application data generated or consumed by the first application between the first communication apparatus and the second communication apparatus, and the framework layer runs on the second communication apparatus. The framework layer sends the first media description information to the first application. The first application runs on the second communication apparatus. The framework layer receives second media description information from the first application. The second media description information is an answer of the first application to the first media description information. The framework layer sends first SDP answer information to the first communication apparatus via the IMS network element. The first SDP answer information includes the second media description information.

According to the foregoing technical solution, after receiving, from the first communication apparatus, the first SDP offer information including the first media description information, the framework layer/an IMS component running on the second communication apparatus may send the first media description information to the first application (an IMS DC application) running on the second communication apparatus. After receiving the first media description information, the first application sends the second media description information to the framework layer. The second media description information is the answer to the first media description information. The framework layer may send the first SDP answer information including the second media description information to the first communication apparatus. In this way, a media negotiation service of the data channel can be provided for the IMS DC application.

With reference to the second aspect, in some implementations of the second aspect, the first SDP offer information further includes third media description information and/or fourth media description information, and the first SDP answer information further includes fifth media description information and/or sixth media description information. The third media description information is description information, offered by the first communication apparatus, of a media resource of an audio channel for transmission of audio data of a call service of the first communication apparatus. The fourth media description information is description information, offered by the first communication apparatus, of a media resource of a video channel for transmission of video data of the call service of the first communication apparatus. The fifth media description information is an answer to the fifth media description information. The sixth media description information is an answer to the sixth media description information.

According to the foregoing solution, the framework layer running on the first communication apparatus may combine the description information (first media description information) of the media resource of the first data channel, the description information (third media description information) of the media resource of the audio channel, and/or the description information (fourth media description information) of the media resource of the video channel into the first SDP offer information, and send the first SDP offer information to the second communication apparatus. The second communication apparatus may also combine the second media description information, the fifth media description information, and/or the sixth media description information into the first SDP answer information, and send the first SDP answer information to the framework layer running on the first communication apparatus.

With reference to the second aspect, in some implementations of the second aspect, the first SDP offer information and the first SDP answer information each indicate a correspondence between the first application and the first data channel.

According to the foregoing solution, when one IMS session supports only one IMS DC application, and the second communication apparatus has not downloaded the first application, the first SDP offer information indicates the correspondence between the first application and the first data channel, so that the second communication apparatus can download the first application based on the correspondence between the first application and the first data channel. When one IMS session supports a plurality of IMS DC applications, the first SDP offer information indicates the correspondence between the first application and the first data channel, so that the second communication apparatus can learn of a specific application that uses the first data channel.

With reference to the second aspect, in some implementations of the second aspect, the first media description information and the second media description information each include a first attribute line and a second attribute line. The first attribute line includes parameter information of the first data channel, the parameter information includes an identifier of the first data channel, and the second attribute line includes an identifier of the first application and the identifier of the first data channel. Alternatively, the first media description information and the second media description information each include a third attribute line. The third attribute line includes parameter information of the first data channel and an identifier of the first application, and the parameter information includes an identifier of the first data channel.

With reference to the second aspect, in some implementations of the second aspect, the first SDP offer information further indicates a correspondence between a first QoS parameter set and the first media description information. The first QoS parameter set includes at least one QoS parameter, offered by the first application, of the first data channel. The first SDP answer information further indicates a correspondence between a second QoS parameter set and the second media description information. The second QoS parameter set is an answer of the second communication apparatus to the first QoS parameter set.

With reference to the second aspect, in some implementations of the second aspect, the first media description information includes the first QoS parameter set, and the second media description information includes the second QoS parameter set. According to the foregoing solution, the IMS DC application may be supported in specifying a QoS parameter of the DC.

With reference to the second aspect, in some implementations of the second aspect, the at least one QoS parameter includes a packet loss rate and a latency.

With reference to the second aspect, in some implementations of the second aspect, the first media description information and seventh media description information are respectively included in a first m segment and a second m segment in the first SDP offer information. The seventh media description information is description information of a media resource of a second data channel, and the second data channel is a channel between the first communication apparatus and the second communication apparatus or between the first communication apparatus and a third communication apparatus for transmission of application data generated or consumed by the first application or a second application. The second media description information and eighth media description information are respectively included in a third m segment and a fourth m segment in the first SDP answer information. The eighth media description information is an answer to the seventh media description information.

For example, when the first SDP offer information further indicates the correspondence between the first QoS parameter set and the first media description information, the first media description information and the seventh media description information are respectively included in the first m segment and the second m segment in the first SDP offer information, and the second media description information and the eighth media description information are respectively included in the third m segment and the fourth m segment in the first SDP answer information. Alternatively, when the framework layer receives the first indication information from the first application, the first media description information and the seventh media description information are respectively included in the first m segment and the second m segment in the first SDP offer information, and the second media description information and the eighth media description information are respectively included in the third m segment and the fourth m segment in the first SDP answer information.

According to the foregoing solution, when the second data channel is for transmission of the application data generated or consumed by the second application between the first communication apparatus and the second communication apparatus, different IMS DC applications can share one IMS session context. When the second data channel is for transmission of the application data generated or consumed by the first application or the second application between the first communication apparatus and the third communication apparatus, a same communication apparatus can be supported in establishing data channels with a plurality of peer communication apparatuses in one IMS session context.

With reference to the second aspect, in some implementations of the second aspect, the first media description information and seventh media description information are included in a fifth m segment in the first SDP offer information. The seventh media description information is description information of a media resource of a second data channel, and the second data channel is a channel between the first communication apparatus and the second communication apparatus or between the first communication apparatus and a third communication apparatus for transmission of application data generated or consumed by the first application or a second application. The second media description information and eighth media description information are included in a sixth m segment in the first SDP answer information. The eighth media description information is an answer to the seventh media description information.

For example, when the first SDP offer information does not indicate the correspondence between the first QoS parameter set and the first media description information, and the framework layer does not receive the first indication information from the first application, the first media description information and the seventh media description information are included in the fifth m segment in the first SDP offer information, and the second media description information and the eighth media description information are included in the sixth m segment in the first SDP answer information.

According to the foregoing solution, when the second data channel is for transmission of the application data generated or consumed by the second application between the first communication apparatus and the second communication apparatus, different IMS DC applications can share one IMS session context. When the second data channel is for transmission of the application data generated or consumed by the first application or the second application between the first communication apparatus and the third communication apparatus, a same communication apparatus can be supported in establishing data channels with a plurality of peer communication apparatuses in one IMS session context.

With reference to the second aspect, in some implementations of the second aspect, the first communication apparatus is a first terminal device, and the second communication apparatus is the second terminal device or the server corresponding to the first application.

With reference to the second aspect, in some implementations of the second aspect, the IMS network element includes a P-CSCF network element. The IMS network element is one or more IMS network elements in an IMS network.

According to a third aspect, a communication apparatus is provided. The communication apparatus includes a framework layer, configured to receive first media description information from a first application. The first media description information is description information, offered by the first application, of a media resource of a first data channel, the first data channel is a channel between a first communication apparatus and a second communication apparatus for transmission of application data generated or consumed by the first application, and both the framework layer and the first application run on the first communication apparatus.

The framework layer is further used to send first SDP offer information to the second communication apparatus via an IMS network element. The first SDP offer information includes the first media description information.

The framework layer is further used to receive first SDP answer information from the second communication apparatus. The first SDP answer information includes second media description information, and the second media description information is an answer to the first media description information.

The framework layer is further used to send the second media description information to the first application.

With reference to the third aspect, in some implementations of the third aspect, the first SDP offer information further includes third media description information and/or fourth media description information, and the first SDP answer information further includes fifth media description information and/or sixth media description information. The third media description information is description information that is of a media resource of an audio channel and that is offered by the framework layer, and the audio channel is used for transmission of audio data of a call service of the first communication apparatus. The fourth media description information is description information, offered by the framework layer, of a media resource of a video channel for transmission of video data of the call service of the first communication apparatus. The fifth media description information is an answer to the fifth media description information. The sixth media description information is an answer to the sixth media description information.

With reference to the third aspect, in some implementations of the third aspect, the first SDP offer information and the first SDP answer information each indicate a correspondence between the first application and the first data channel.

With reference to the third aspect, in some implementations of the third aspect, the first media description information and the second media description information each include a first attribute line and a second attribute line. The first attribute line includes parameter information of the first data channel, the parameter information includes an identifier of the first data channel, and the second attribute line includes an identifier of the first application and the identifier of the first data channel. Alternatively, the first media description information and the second media description information each include a third attribute line. The third attribute line includes parameter information of the first data channel and an identifier of the first application, and the parameter information includes an identifier of the first data channel.

With reference to the third aspect, in some implementations of the third aspect, the framework layer is further used to receive a first quality of service QoS parameter set from the first application. The first QoS parameter set includes at least one QoS parameter, offered by the first application, of the first data channel. The first SDP offer information further indicates a correspondence between the first QoS parameter set and the first media description information. The first SDP answer information further indicates a correspondence between a second QoS parameter set and the second media description information, and the second QoS parameter set is an answer of the second communication apparatus to the first QoS parameter set.

With reference to the third aspect, in some implementations of the third aspect, the first media description information includes the first QoS parameter set, and the second media description information includes the second QoS parameter set.

With reference to the third aspect, in some implementations of the third aspect, the at least one QoS parameter includes a packet loss rate and a latency.

With reference to the third aspect, in some implementations of the third aspect, the framework layer is further used to receive first indication information from the first application. The first indication information indicates that the first data channel uses an independent bearer.

With reference to the third aspect, in some implementations of the third aspect, the first media description information and seventh media description information are respectively included in a first m segment and a second m segment in the first SDP offer information. The seventh media description information is description information of a media resource of a second data channel, and the second data channel is a channel between the first communication apparatus and the second communication apparatus or between the first communication apparatus and a third communication apparatus for transmission of application data generated or consumed by the first application or a second application. The second media description information and eighth media description information are respectively included in a third m segment and a fourth m segment in the first SDP answer information. The eighth media description information is an answer to the seventh media description information.

With reference to the third aspect, in some implementations of the third aspect, the first media description information and seventh media description information are included in a fifth m segment in the first SDP offer information. The seventh media description information is description information of a media resource of a second data channel, and the second data channel is a channel between the first communication apparatus and the second communication apparatus or between the first communication apparatus and a third communication apparatus for transmission of application data generated or consumed by the first application or a second application. The second media description information and eighth media description information are included in a sixth m segment in the first SDP answer information. The eighth media description information is an answer to the seventh media description information.

With reference to the third aspect, in some implementations of the third aspect, the first communication apparatus is a first terminal device, and the second communication apparatus is a second terminal device or a server corresponding to the first application.

With reference to the third aspect, in some implementations of the third aspect, the IMS network element includes a P-CSCF network element.

According to a fourth aspect, a framework layer is provided. The communication apparatus includes the framework layer, configured to receive first SDP offer information from a first communication apparatus via an IMS network element. The first SDP offer information includes first media description information, the first media description information is description information that is of a media resource of a first data channel and that is offered by a first application, the first data channel is a channel used for transmission of application data generated or consumed by the first application between the first communication apparatus and a second communication apparatus, the first application runs on the first communication apparatus and the second communication apparatus, and the framework layer runs on the second communication apparatus.

The framework layer is further used to send the first media description information to the first application.

The framework layer is further used to receive second media description information from the first application. The second media description information is an answer to the first media description information.

The framework layer is further used to send first SDP answer information to the first communication apparatus via the IMS network element. The first SDP answer information includes the second media description information.

With reference to the fourth aspect, in some implementations of the fourth aspect, the first SDP offer information further includes third media description information and/or fourth media description information, and the first SDP answer information further includes fifth media description information and/or sixth media description information. The third media description information is description information, offered by the first communication apparatus, of a media resource of an audio channel for transmission of audio data of a call service of the first communication apparatus. The fourth media description information is description information, offered by the first communication apparatus, of a media resource of a video channel for transmission of video data of the call service of the first communication apparatus. The fifth media description information is an answer to the fifth media description information. The sixth media description information is an answer to the sixth media description information.

With reference to the fourth aspect, in some implementations of the fourth aspect, the first SDP offer information and the first SDP answer information each indicate a correspondence between the first application and the first data channel.

With reference to the fourth aspect, in some implementations of the fourth aspect, the first media description information and the second media description information each include a first attribute line and a second attribute line. The first attribute line includes parameter information of the first data channel, the parameter information includes an identifier of the first data channel, and the second attribute line includes an identifier of the first application and the identifier of the first data channel. Alternatively, the first media description information and the second media description information each include a third attribute line. The third attribute line includes parameter information of the first data channel and an identifier of the first application, and the parameter information includes an identifier of the first data channel.

With reference to the fourth aspect, in some implementations of the fourth aspect, the first SDP offer information further indicates a correspondence between a first QoS parameter set and the first media description information. The first QoS parameter set includes at least one QoS parameter, offered by the first application, of the first data channel. The first SDP answer information further indicates a correspondence between a second QoS parameter set and the second media description information. The second QoS parameter set is an answer of the second communication apparatus to the first QoS parameter set.

With reference to the fourth aspect, in some implementations of the fourth aspect, the first media description information includes the first QoS parameter set, and the second media description information includes the second QoS parameter set.

With reference to the fourth aspect, in some implementations of the fourth aspect, the at least one QoS parameter includes a packet loss rate and a latency.

With reference to the fourth aspect, in some implementations of the fourth aspect, the first media description information and seventh media description information are respectively included in a first m segment and a second m segment in the first SDP offer information. The seventh media description information is description information of a media resource of a second data channel, and the second data channel is a channel between the first communication apparatus and the second communication apparatus or between the first communication apparatus and a third communication apparatus for transmission of application data generated or consumed by the first application or a second application. The second media description information and eighth media description information are respectively included in a third m segment and a fourth m segment in the first SDP answer information. The eighth media description information is an answer to the seventh media description information.

With reference to the fourth aspect, in some implementations of the fourth aspect, the first media description information and seventh media description information are included in a fifth m segment in the first SDP offer information. The seventh media description information is description information of a media resource of a second data channel, and the second data channel is a channel between the first communication apparatus and the second communication apparatus or between the first communication apparatus and a third communication apparatus for transmission of application data generated or consumed by the first application or a second application. The second media description information and eighth media description information are included in a sixth m segment in the first SDP answer information. The eighth media description information is an answer to the seventh media description information.

With reference to the fourth aspect, in some implementations of the fourth aspect, the first communication apparatus is a first terminal device, and the second communication apparatus is a second terminal device or a server corresponding to the first application.

With reference to the fourth aspect, in some implementations of the fourth aspect, the IMS network element includes a P-CSCF network element.

According to a fifth aspect, a processor is provided. The processor is configured to perform the method provided in the first aspect or the second aspect. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the foregoing information is output by the processor, other processing may further need to be performed on the information, and processed information arrives at the transceiver. Similarly, when the processor receives the foregoing input information, the transceiver obtains/receives the information, and inputs the information into the processor. Further, after the transceiver receives the foregoing information, other processing may need to be performed on the information, and processed information is input into the processor.

Based on the foregoing principle, for example, receiving the media description information mentioned in the foregoing methods may be understood as receiving input information by the processor.

Unless otherwise specified, if operations such as transmitting, sending, and obtaining/receiving related to the processor do not contradict an actual function or internal logic of the operations in the related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in embodiments of this application.

According to a sixth aspect, a computer-readable storage medium is provided. The computer-readable storage medium stores program code to be executed by a device, and the program code is used to perform the method provided in the first aspect or the second aspect.

According to a seventh aspect, a computer program product including instructions is provided. When the computer program product runs on a computer, the computer is caused to perform the method provided in the first aspect or the second aspect.

According to an eighth aspect, a chip is provided. The chip includes a processor and a communication interface. The processor reads, through the communication interface, instructions stored in a memory, to perform the method provided in the first aspect or the second aspect.

Optionally, in an implementation, the chip may further include the memory. The memory stores the instructions, and the processor is configured to execute the instructions stored in the memory. When the instructions are executed, the processor is configured to perform the method provided in the first aspect or the second aspect.

According to a ninth aspect, a communication system is provided. The communication system includes a first communication apparatus configured to perform the method shown in the first aspect, and a second communication apparatus configured to perform the method shown in the second aspect.

The solutions provided in the third aspect to the ninth aspect are used to implement or cooperate to implement the method provided in the first aspect or the second aspect, and therefore, can achieve beneficial effects the same as or corresponding to those in the first aspect or the second aspect. Details are not described herein again.

### BRIEF DESCRIPTION OF DRAWINGS

FIG. 1 is a diagram of a network architecture applicable to an embodiment of this application;
FIG. 2 is a diagram of another network architecture applicable to an embodiment of this application;
FIG. 3 is a diagram of a data channel protocol stack based on SCTP/DTLS/UDP/IP;
FIG. 4 is a diagram of an Offer/Answer model;
FIG. 5 is a model diagram of media description information of an audio channel, a video channel, and data channels in one IMS session;
FIG. 6 is an example of an architectural diagram of a terminal device whose Android operating system supports an IMS DC;
FIG. 7 is a diagram of a WebRTC architecture;
FIG. 8 is an example of SDP information;
FIG. 9 is a diagram of interaction between a Web application and a JSEP implementation;
FIG. 10 is a diagram of a WebRTC call procedure;
FIG. 11 is an example of an architectural diagram of a terminal device supporting an IMS DC according to an embodiment of this application;
FIG. 12 is an example flowchart of a media negotiation method according to an embodiment of this application;
FIG. 13 is an example of a correspondence between a first application and a first data channel;
FIG. 14 is another example of a correspondence between a first application and a first data channel;
FIG. 15 is an example of a QoS parameter;
FIG. 16 is an example of a QoS parameter and a correspondence between a first application and a first data channel;
FIG. 17 is an example of a QoS parameter and a correspondence between a first application and a first data channel;
FIG. 18 is an example of combining media description information of different data channels;
FIG. 19 is an example of splitting media description information of different data channels;
FIG. 20 is another example flowchart of a media negotiation method according to an embodiment of this application;
FIG. 21A and FIG. 21B are another example flowchart of a media negotiation method according to an embodiment of this application;
FIG. 22A and FIG. 22B are another example flowchart of a media negotiation method according to an embodiment of this application;
FIG. 23 is a schematic block diagram of a communication apparatus according to an embodiment of this application;
FIG. 24 is a diagram of another communication apparatus according to an embodiment of this application; and
FIG. 25 is a diagram of a chip system according to an embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. In descriptions of this application, unless otherwise specified, "a plurality of" means two or more than two.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numeric numbers in this application are merely used for differentiation for ease of description, and are not used to limit the scope of this application. The sequence numbers of the foregoing processes do not mean execution sequences, and the execution sequences of the processes should be determined based on functions and internal logic of the processes.

In the specification, claims, and accompanying drawings of this application, the terms "first", "second", "third", "fourth", various other term numerals, and the like (if existent) are intended to distinguish between similar objects but do not necessarily describe a specific order or sequence. It should be understood that the terms used in such a way are interchangeable in proper circumstances, so that the embodiments described herein can be implemented in other orders than the order illustrated or described herein. In addition, the terms "include", "have", and any other variants thereof are intended to cover the non-exclusive inclusion. For example, a process, method, system, product, or device that includes a list of steps or units is not necessarily limited to those steps or units that are expressly listed, but may include other steps or units that are not expressly listed or inherent to such a process, method, product, or device.

The technical solutions provided in this application may be applied to various communication systems, for example, a 5th generation (5th generation, 5G) communication system (or referred to as a new radio (new radio, NR) system), a 4th generation (4th generation, 4G) communication system (or referred to as a long term evolution (long term evolution, LTE) system), an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system.

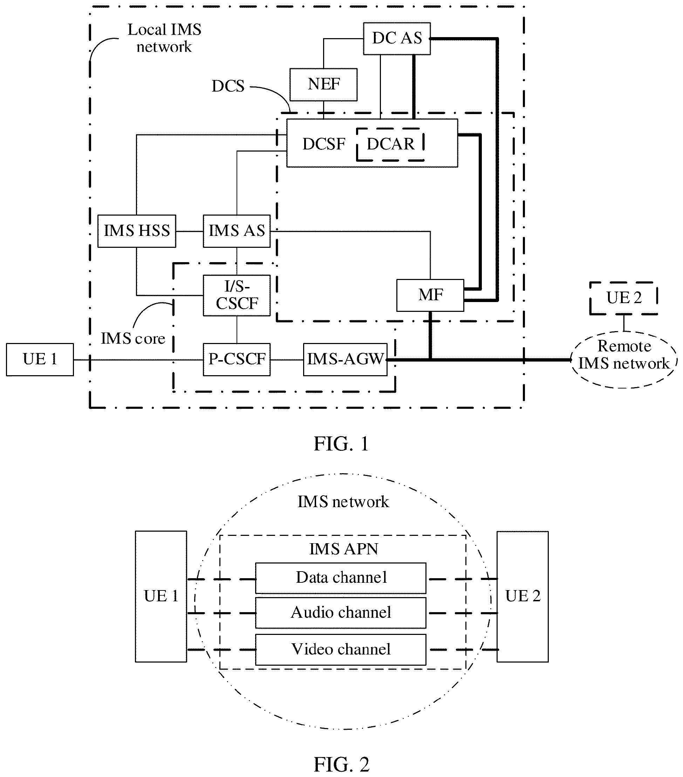

A communication system 100 applicable to an embodiment of this application is described below by using examples and with reference to FIG. 1. It may be understood that the communication system described in this application is merely an example, and should not constitute any limitation on this application. The following briefly describes each network element (or referred to as a functional network element, a functional entity, a node, a device, or the like) shown in FIG. 1.
1. User equipment (user equipment, UE): The UE may be any device that can access a network, and may also be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, a user apparatus, or the like. The UE may be a device that provides a voice/data connectivity for a user, for example, a handheld device or a vehicle-mounted device that has a wireless connection function. Currently, some examples of the terminal may be: a mobile phone (mobile phone), a tablet computer (pad), a computer having a wireless transceiver function (for example, a notebook computer or a palmtop computer), a mobile internet device (mobile internet device, MID), a virtual reality (virtual reality, VR) device, an AR device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or computing device having a wireless communication function, another processing device connected to a wireless modem, a vehicle-mounted device, a wearable device, a terminal device in a 4G/5G network, a terminal device in a future evolved public land mobile communication network (public land mobile network, PLMN), and the like.

In addition, the UE may alternatively be a UE in an internet of things (Internet of things, IoT) system. An IoT is an important part in future development of information technologies. A main technical feature of the IoT is to connect things to a network by using a communication technology, to implement an intelligent network for human-machine interconnection and thing-thing interconnection. The IoT technology can implement massive connections, deep coverage, and terminal power saving by using, for example, a narrow band (narrow band, NB) technology.

In addition, the UE may further include an intelligent printer, a train detector, and the like, and main functions of the UE include: collecting data (which is a function of some terminal devices), receiving control information and downlink data of a network device, sending an electromagnetic wave, and transmitting uplink data to the network device.

Optionally, the UE may serve as a base station. For example, the user equipment may serve as a scheduling entity that provides a sidelink signal between user equipments in vehicle-to-everything (vehicle-to-everything, V2X), device-to-device (device-to-device, D2D), or the like. For example, a cellular phone and an automobile communicate with each other by using a sidelink signal. The cellular phone communicates with a smart household device without relaying a communication signal by a base station.

In network architectures provided in embodiments of this application, different UEs may perform an IMS call via IMS networks. For example, a UE 1 and a UE 2 in FIG. 1 may perform an IMS call through IMS networks. The UE 2 may be referred to as a peer device that performs the IMS call with the UE 1. Similarly, the UE 1 may be referred to as a peer device that performs the IMS call with the UE 2. It is assumed that the UE 1 is a device that initiates the call. For the UE 1, the IMS network serving the UE 1 may be referred to as a local IMS (Local IMS) network, and the IMS network serving the UE 2 may be referred to as a remote IMS (Remote IMS) network. It may be understood that a network element architecture inside the remote IMS network is similar to a network element architecture inside the local IMS network. For brevity, the network element architecture inside the remote IMS network is not shown in the figure.

2. Call session control function (call session control function, CSCF) network element: The CSCF is a functional entity inside an IMS, and is a core of the entire IMS. The CSCF is mainly responsible for processing signaling control in a multimedia call session process. The CSCF manages user authentication of the IMS and quality of service (quality of service, QoS) on an IMS bearer-plane, cooperates with another network element to perform control on a session initiation protocol (session initiation protocol, SIP) session, service negotiation, resource allocation, and the like. For ease of description, the CSCF network element in this application is referred to as the "CSCF".

The CSCF may communicate with the terminal device, and the CSCF may communicate with a gateway device. For example, the CSCF may select the gateway device that communicates with the terminal device. In addition, the CSCF may allocate routing information, for example, an IP address or a port, to the terminal device and the gateway device.

By way of example, and not limitation, the CSCF is classified into a proxy CSCF (proxy CSCF, P-CSCF), an interrogating CSCF (interrogating CSCF, I-CSCF), a serving CSCF (serving CSCF, S-CSCF), and the like based on functions.

The P-CSCF is an entry node for a user to access the IMS network, and is mainly responsible for forwarding SIP signaling between the IMS user and a home network. The I-CSCF is a unified entry point for the IMS user to the home network, and is responsible for allocating or interrogating the S-CSCF that serves the user. The S-CSCF is responsible for registration, authentication, session, routing, and service triggering of the IMS user.

It may be understood that the P-CSCF, the S-CSCF, and the I-CSCF may be independently disposed in different entities, or may be integrated into a same entity. This is not limited in this application.

3. IMS access media gateway (access media gateway, AGW): The IMS AGW may provide functions of an IMS network access gateway and media gateway.

It may be understood that the CSCF and the IMS AGW may be collectively referred to as an IMS core. A manner of signaling exchange between network elements in the IMS core is not limited in this application.

4. Data channel server (data channel server, DCS): The DCS may be divided into two logical functional entities: a data channel signaling function (data channel signaling function, DCSF) network element and a media function (media function, MF) network element. The MF network element is configured to provide a data channel media resource management function, and the DCSF network element is configured to provide a data channel signaling control function.

It may be understood that in actual network deployment, the DCSF network element and the MF network element may be integrated (referred to as the DCS in this case), or may be separated. This is not limited in this application.

5. Data channel application repository (data channel application repository, DCAR): The DCAR is a repository used to store DC Apps.

After completing development of a DC App, a developer uploads the DC App to a DCS of an operator, and the DCS stores the DC App in the DCAR. When necessary, the DCS downloads the DC App from the DCAR to a local for subsequent processing.
6. Home subscriber server (home subscriber server, HSS): The HSS serves as a database for storing user information in the IMS, and the user stores user data. By way of example, and not limitation, the user data may include information about a data channel service subscribed to and used by the user and the operator.
7. IMS application server (application server, AS): The IMS AS is an application layer device at a top layer of the IMS system, and provides basic services and supplementary services, for example, a multimedia conference, convergent communication, a short message service gateway, and a standard attendant console. The IMS network is an IP bearer-based open system that provides various multimedia services for the user. The IMS AS interacts with the CSCF to trigger and execute various network services. In addition, the terminal device is communicatively connected to the IMS AS. The IMS AS may establish a data channel for the terminal device.
8. Data channel application server (data channel application server, DC AS): The DC AS is configured to provide data channel service logic.
9. Network exposure function (network exposure function, NEF) network element: The NEF network element is configured to securely expose various services of a 5GC network for a third party.

It may be understood that the foregoing network architecture applied to embodiments of this application is merely an example, and the network architecture applicable to embodiments of this application is not limited thereto. Any network architecture that can implement functions of the foregoing network elements is applicable to embodiments of this application. To be specific, the network architecture and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as a network architecture evolves and a new service scenario emerges.

It may be further understood that the network elements or devices listed in the foregoing network architecture are merely examples for description, and the network architecture applicable to this application may further include another network element or device. This is not limited in this application.

It may be further understood that names of the foregoing network elements or devices are defined only for ease of distinguishing between different functions, and should not constitute any limitation on this application. This application does not exclude a possibility of using other names in the 4G network, the 5G network, and another future network. For example, in a 6G network, some or all of the foregoing network elements may still use terms in 4G/5G, or may use other names.

In embodiments of this application, a communication apparatus (for example, the foregoing terminal device, CSCF device, or AS device) includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (Process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features in embodiments of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

To facilitate understanding of the technical solutions in embodiments of this application, before the solutions in embodiments of this application are described, some terms or concepts that may be used in embodiments of this application are first described.

### 1. IMS session

The IMS session in embodiments of this application is a service in which the communication device, as a calling identity or a called identity, continuously participates in a voice call or a video call with one or more other communication devices via a network element in the IMS. The IMS session may also be referred to as an IMS call, IMS calling, or the like.

The IMS session may cover an entire process from a start of dialing to an end of the call, or may cover a part of the process from the start of the dialing to the end of the call, for example, a process from parties that participate in the IMS session entering a call state to the end of the call.

The IMS session may be in a one-to-one form, or may be in a one-to-many (for example, a conference) form. In embodiments of this application, the one-to-one form is used as an example, but all related solutions may be used in the one-to-many form.

### 2. Voice call and video call

The voice call in embodiments of this application refers to a call in which audio content is transmitted in real time between participant user equipments in an IMS session to implement voice interaction. The video call in embodiments of this application refers to a call in which audio content and/or video content are/is transmitted in real time between participant user equipments in an IMS session to implement video interaction. The voice call and the video call may be collectively referred to as an audio/video call.

### 3. Additional communication information

The additional communication information described in embodiments of this application is used to perform communication other than the voice call or the video call between the participant devices in the IMS session, or the additional communication information is information used to perform communication between the participant devices in the IMS call service other than the audio/video interaction content.

In an example, the additional communication information may include at least one of the following: content shot by a camera of the user equipment, information generated by a thumb up (thumb up), information generated by sending a red packet, desktop sharing content, a mark drawn by the user on a screen, a text message entered by the user, picture information entered by the user, geographical location information, video content in a video file, or the like. The information may be produced or consumed by any device of a calling terminal device or a called terminal device, or may be produced or consumed by a device connected to the calling terminal device or the called terminal device.

In embodiments of this application, the additional communication information may be transmitted (sent or received) by a data channel application on the participant terminal device in the IMS session through a data channel, and corresponding processing (presentation, control, and the like) is performed. The additional communication information in embodiments of this application may be understood as application data generated or consumed by the data channel application.

### 4. Data channel

The data channel in embodiments of this application is also referred to as an IMS data channel (IMS data channel, IMS DC), that is, a data channel in the IMS.

For example, the DC may provide users with rich real-time interaction services in addition to the audio and video calls. For example, terminal devices (for example, a UE 1 and a UE 2 in FIG. 2) in a same IMS session service determine, through an IMS SIP/SDP media negotiation procedure, an IP address, a port, and a transmission protocol used by the two terminal devices for data transmission, key information needed by the transport layer protocol, and description information corresponding to a data channel, to establish one or more data channels (for example, a data channel shown in FIG. 2) for parallel transmission with audio (Speech) and video (Video) channels in the IMS session.

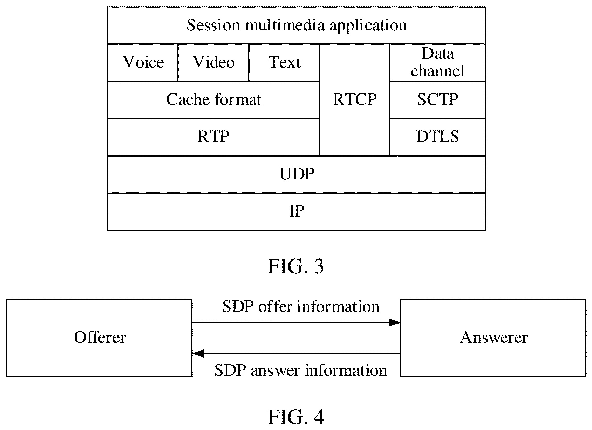

The data channel may be used for data transmission based on the stream control transmission protocol (stream control transmission protocol, SCTP), or may be used for data transmission based on another transport layer protocol. This is not limited in this application. FIG. 3 is a diagram of a data channel protocol stack based on SCTP/datagram transport layer security (datagram transport layer security, DTLS)/user datagram protocol (user datagram protocol, UDP)/IP. The UE 1 and the UE 2 may download various applications (namely, DC Apps) from a network side DCSF through the data channel, and run these applications before, during, or after an audio/video call. Application data of various types of these applications is transmitted through the data channel, so that the UE 1 and the UE 2 can perform communication other than the voice call or the video call, for example, screen sharing (screen sharing), simultaneous translation (simultaneous translation), location sharing, superposition of an AR special effect, and even synchronous immersive interaction of hearing, vision, touch, and the like, to improve user experience.

The data channels may be classified into two types based on different purposes: a bootstrap data channel (bootstrap data channel, BDC) and an application data channel (application data channel, ADC).

The BDC is used by the terminal device to obtain the DC App from the DCSF.

A terminal device supporting a data channel capability may establish the BDC with a DCSF in a call originating network and/or a DCSF in a call terminating network. A specific manner depends on whether the networks support the data channel capability and service subscription statuses of both the communication terminal devices in the networks.

In addition, for example, data may be transmitted through the BDC by using a hypertext transfer protocol (hypertext transfer protocol, HTTP), and a value of a stream ID of the BDC may be less than 1000.

The ADC is used for transmission of interaction data/application data generated by DC Apps running on both the communication parties. In a P2P scenario, the ADC is established between both the communication terminal devices. In this case, the ADC is used for transmission of the interaction data/application data generated by the DC Apps running on both the communication terminal devices.

In addition, data transmission may be performed through the ADC by using any protocol. For example, a value of a stream ID of the ADC may be greater than or equal to 1000.

### 5. Data channel application

The data channel application in embodiments of this application may also be referred to as an IMS DC application (IMS data channel application, IMS DC App). The IMS DC application may be used for transmission of additional communication information through a data channel between a plurality of terminal devices in a same IMS call service. In an example, the data channel application is network (Web) content including a hypertext markup language (hypertext markup language, HTML), a JavaScript script, a picture, and a cascading style sheets (cascading style sheets, CSS), describes a graphical user interface (user interface, UI), and can implement interactive service logic.

The data channel application may be usually downloaded from a network side by a call application on the terminal device, runs during an IMS call, and does not need to be installed or uninstalled. It may be understood that the data channel application may exist in a form of a Web page, or may exist in a form of an applet, a quick app, a light app, or the like. This is not limited in this application.

For example, the data channel application in embodiments of this application may be a DC App in the 4G/5G network. The DC App can transfer various types of data such as a text, an image, a location, and a file before and after an IMS call is established, to implement communication between both communication parties other than a voice call or a video call. This can greatly improve experience of both the communication parties.

The terminal device may obtain the DC App from the DCSF through the BDC in an HTTP procedure, may automatically or interactively update the DC App at any time, and performs communication other than the voice call or the video call with the peer terminal device via the DC App. For example, a first terminal device and a second terminal device are in a same IMS call service. Assuming that the first terminal device intends to share a mobile phone screen of the first terminal device with the second terminal device in a call process with the second terminal device, to indicate B to perform a mobile phone setting, the first terminal device and the second terminal device may first respectively obtain DC Apps used for screen sharing, and separately run the DC Apps to perform communication other than the voice call or the video call with peer UE.

### 6. Framework layer

The framework layer in embodiments of this application is used to provide a communication service for the IMS DC App, including but not limited to a media negotiation service of the data channel. Therefore, the framework layer may also be referred to as a communication service layer, a communication service platform, an operating system layer, a data channel application running environment, a data channel application running container, a data channel application user agent, or the like of the IMS DC App. For example, the framework layer may be deployed on a communication apparatus (for example, a mobile phone) on which the IMS DC App runs, or may be deployed outside the communication apparatus on which the IMS DC App runs. This is not limited in embodiments of this application. For ease of description, in embodiments of this application, an example in which the framework layer is deployed on the communication apparatus on which the IMS DC App runs is used for description.

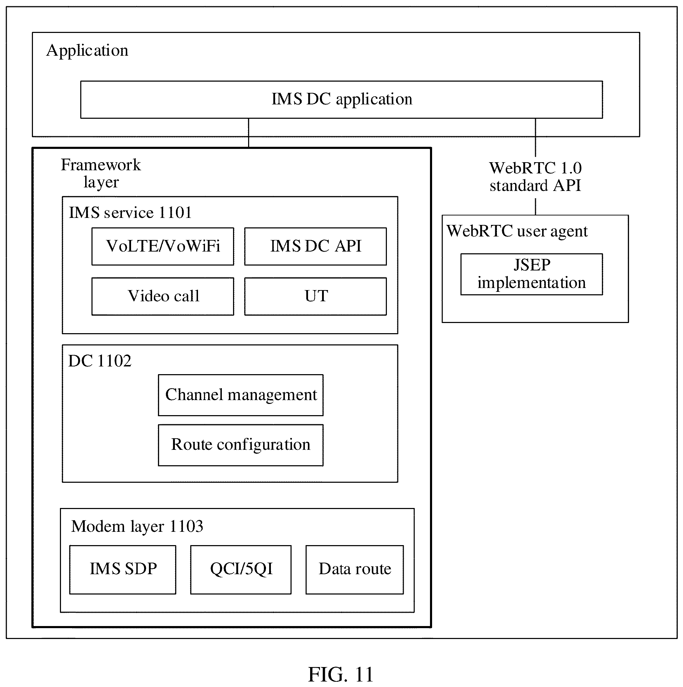

For example, for a concept of the framework layer, further refer to related descriptions in FIG. 11.

### 7. Media description (media description) information and media negotiation

The media description information in embodiments of this application is information related to media resources for an IMS call, for example, an IP address, port information, a TLS ID, a certificate, and a stream identifier (stream ID) of a DC. Therefore, the media description information in embodiments of this application may also be referred to as media information or media resource information.

Both UEs (for example, the UE 1 and the UE 2 in FIG. 2) that perform the IMS call may obtain, through media description information negotiation, media description information for establishing the data channel between the UE 1 and the UE 2. The media description information negotiation herein means that the UE 1 and the UE 2 negotiate media description information used by each other for performing the IMS call, that is, the UE 1 and the UE 2 need to know the media description information used by each other for receiving and sending media.

Both the UEs performing the IMS call use an offer (Offer)/answer (Answer) model to exchange SDP information for media negotiation. FIG. 4 is a diagram of the Offer/Answer model. The model includes two roles: an offerer (Offerer) and an answerer (Answerer). The offerer indicates a party that wants to create or modify a session. SDP offer information sent by the offerer includes media streams and coding scheme sets desired by the offerer, and an IP address and a port number that are used by the offerer to receive and send a media stream. The answerer is a receiver responding to the offerer. The answerer generates SDP answer information to respond to the SDP offer information. The SDP answer information indicates whether the answerer accepts offered media streams, used coding schemes, and IP addresses and port numbers used by the answerer to send and receive the media stream, in the SDP offer.

A basic procedure in which a calling UE1 and a called UE2 perform IMS call media negotiation by using media description information is as follows.
1. The calling UE 1 may include SDP offer information in a SIP INVITE (INVITE)/UPDATE (UPDATE)/re-INVITE (re-INVITE) message, where the SDP offer information includes media streams and coding scheme sets that the calling UE1 expects to establish, and routes the SDP offer information to the called UE 2 through an IMS network. Specifically, when an IMS session is created, the calling UE 1 sends an original SDP through the INVITE message. During the IMS session establishment, if the SDP needs to be updated, the calling UE 1 performs media negotiation again through the SIP UPDATE message. After the IMS session is successfully created, if the SDP needs to be updated, the calling UE 1 performs media negotiation again through the SIP re-INVITE message.
2. The called UE 2 may send a 183/200 OK response message, where the 183/200 OK response message carries SDP answer information, including a media stream and a coding scheme that are supported by the called UE 2, may reject some media streams in the SDP offer information, and route the 183/200 OK response message to the calling UE 1 through the IMS network.

A protocol stack of a data channel may be SCTP, and a connection established between two terminal devices is referred to as an SCTP association/SCTP connection. The SCTP association may be described as one piece of data channel media description information in the SDP information. The SCTP association includes a plurality of unidirectional streams (streams). The streams are independent of each other and are marked by stream IDs. Data can be sent on each stream independently without being affected by another stream. The data channel is essentially two reverse streams on the SCTP association. The two streams use a same stream ID. A media resource of the data channel may be described as an a=dcmap line in the media description information of the data channel in the SDP information. All lines from one "m=" line (including the "m=" line) to a next "m=" line (excluding the next "m=" line) or a last line (including the last line) of the SDP information are referred to as an m segment ("m=" line). An m segment starting with an "m=application" line is referred to as a DC m segment.

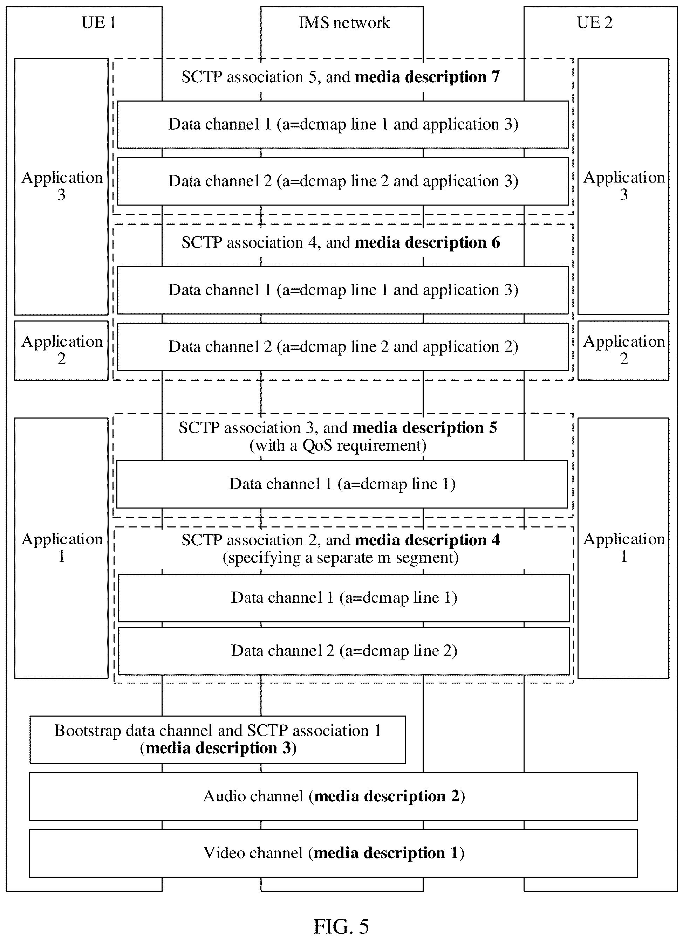

FIG. 5 is a model diagram of media description information of an audio channel, a video channel, and data channels in one IMS session. For ease of description, the media description information is referred to as a media description for short in FIG. 5, and all applications in FIG. 5 are IMS DC applications. An IMS session can be described as an SDP. Bold characters in the figure indicate expressions of the data channels in the SDP. As shown in FIG. 5, there are three IMS DC applications in the IMS session. After a terminal device downloads an application 1 through a BDC, when the application 1 creates a data channel, the SDP of the IMS session already includes media descriptions of the audio, the video, and the BDC. In this case, a media description of an ADC created by the application 1 needs to be added to the SDP, and media renegotiation is performed. The terminal device continues to download an application 2. When the application 2 creates a data channel, the SDP of the IMS session already includes the media descriptions of the audio, the video, and the BDC, and the media description of the ADC created by the application 1. A media description of an ADC created by the application 2 needs to be added to the SDP, and media renegotiation is performed. The terminal device continues to download an application 3. When the application 3 creates a data channel, the SDP of the IMS session already includes the media descriptions of the audio, the video, and the BDC, the media description of the ADC created by the application 1, and the media description of the ADC created by the application 2. A media description of an ADC created by the application 3 needs to be added to the SDP, and media renegotiation is performed.

The following describes an IMS DC media negotiation procedure by using an example. First, in a process of establishing the BDC, media description information of the BDC can be negotiated through INVITE, UPDATE, and re-INVITE messages. When the calling UE 1 initiates a call to the called UE 2, in a call establishment process, SDP offer information is carried in the INVITE message, and the SDP offer information includes the media description information of the audio, the video, and the BDC. Alternatively, after an audio/video session is established, SDP offer information including the media description information of the BDC is carried in the re-INVITE message. It is assumed that a number of the foregoing SDP offer information including the media description information of the BDC is SDP#1, the SDP offer includes audio media description information (numbered m#1), video media description information (numbered m#2), and BDC media description information (numbered m#3). The BDC media description information includes two DCs, which are respectively represented by attribute lines a=dcmap:0 and a=dcmap: 100.

A media negotiation process of the ADC can be implemented through the re-INVITE message. After the calling UE 1 and the called UE 2 have established an audio/video session, and the two UEs have established BDCs with the IMS network, if the UE 1 needs to send a file to the UE 2, the UE 1 selects an application "Send File" on a call screen of the UE 1. In this case, the UE 1 obtains the "Send File" application through the established BDC. To use the "Send File" application to send the file to the UE 2, the "Send File" application on the UE 1 triggers an establishment procedure of an ADC between the UE 1 and the UE 2. In this case, the re-INVITE message sent by the UE 1 to the UE 2 carries SDP offer information. A number of the SDP offer information is SDP#2, the SDP offer information is used to trigger the establishment procedure of the ADC between the UE 1 and the UE 2, and the SDP offer information includes the audio media description information (numbered m#1), the video media description information (numbered m#2), the BDC media description information (numbered m#3), and ADC media description information (numbered m#4). m#1, m#2, and m#3 are already included in SDP#1, the new ADC media description information is specified by the "Send File" application and added to SDP#1, and a correspondence between the ADC media description information and the "Send File" application is added, to form SDP#2.

The correspondence between the ADC media description information (numbered m#4) and the "Send File" application may be represented in the following two manners:
(1) An application identifier (appid) of the "Send File" application is marked in a label parameter of an a=dcmap attribute line, to describe the correspondence between the ADC media description information and the "Send File" application.
(2) An a attribute line is added to an m=application segment corresponding to the ADC media description information, to describe the correspondence between the ADC media description information and the "Send File" application. For example, an a=3gpp-req-app attribute line may be bound to the m=application segment or the a=dcmap attribute line.

In one case, assuming that the UE 1 not only needs to send the file to the peer UE 2, but also needs to send a file to an IMS network side, a new ADC is established between the UE 1 and the IMS network side. In this case, the UE 1 needs to initiate new media negotiation, and the "Send File" application needs to generate new ADC media description information (m#5) and add the new ADC media description information (m#5) to SDP#2.

In another case, if the UE 1 needs to send a specific file to the UE 2, there is a special quality of service (quality of service, QoS) requirement, for example, a latency (latency) requirement and a packet loss rate (loss) requirement, and the original ADC media description information (numbered m#4) cannot meet the requirement, a new m segment needs to be created for this special scenario, special QoS requirement information (numbered m#6) needs to be represented by using an a=3gpp-qos-hint attribute line, and the special QoS requirement information is combined into SDP#2.

After the use of "Send File", if both the calling UE 1 and the called UE 2 need to initiate a "Screen Sharing" application, the "Screen Sharing" application triggers the establishment procedure of the ADC between the UE 1 and the UE 2. When the ADC needed by the "Screen Sharing" application has a special QoS requirement, a separate m segment needs to be used to represent the requirement. The calling UE 1 sends a re-INVITE message that carries SDP offer information including a new ADC media description, a number of the SDP offer information is SDP#3, and ADC media description information (numbered m#7) of the "Screen Sharing" application needs to be added to the SDP offer information. When the "Screen Sharing" application has no special QoS requirement, the existing ADC media description information (numbered m#4) may be reused, and a new a=dcmap attribute line is added to m#4. If the existing ADC media description information (numbered m#4) is reused, a correspondence between the ADC media description information and the application is described by using a label parameter of the a=dcmap attribute line; or an a=3gpp-req-app attribute line is added to describe a correspondence between the ADC media description information and the application.

In conclusion, when an application triggers the establishment procedure of the ADC, new DC media description information needs to be combined into an existing SDP. For example, the ADC media description information is combined into an existing IMS SDP, or an a=dcmap attribute line corresponding to the application is added to an m segment of the IMS SDP.

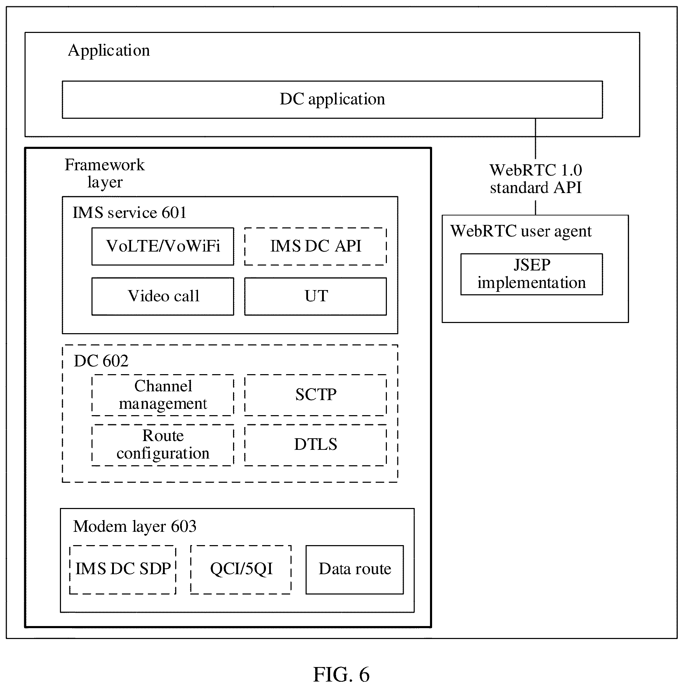

To support the data channel, the terminal device needs to be upgraded and reconstructed. FIG. 6 is an example of an architectural diagram of a terminal device whose Android operating system supports an IMS DC. Dashed-line parts are enhanced functions. A chip modem (modem) layer needs to upgrade a SIP/SDP protocol for enhancement, to support establishment and media negotiation of an IMS data channel. An application program framework (framework) layer needs to connect and manage the data channel via a built-in native system service, and expose an interface for an application layer. This may be specifically implemented by enhancing an IMS service (IMS service) layer. A native call application may be used to establish/remove a data channel between the terminal device and a terminal device/network and send/receive data transmitted through the channel, by using a data channel capability provided through the exposed interface. This is similar to that in the iOS operating system. Details are not described in this application.

In 3GPP TS 26.114, an IMS multimedia telephony service (multimedia telephony service for IMS) natively provided by a terminal device is referred to as an MTSI client, and an MTSI client supporting a DC is referred to as a DCMTSI client (data channel multimedia telephony service for IMS). A native IMS part of the terminal device may be referred to as an IMS component, and the IMS component/framework layer includes an IMS service 601, a DC 602, and a modem 603 in FIG. 6.

For a data channel capability provided by the IMS component, an IMS data channel needs to expose a scheduling interface for a JavaScript application through a Web engine, so that a DC application can trigger an IMS DC creation procedure and send data through the IMS DC, and through the Web engine, process service data of the data channel in real time and display the data on a UI in real time.

GSMA NG.134 recommends using WebRTC API 1.0 to support the IMS DC. As shown in FIG. 6, WebRTC has been integrated into the framework layer of the terminal device. The WebRTC is injected into a browser, to provide a WebRTC 1.0 standard API for the DC application.

The foregoing describes, with reference to the accompanying drawings, an example system architecture to which embodiments of this application can be applied, and basic concepts in this application. The following briefly describes technical solutions related to embodiments of this application.
1. Web real-time communication (Web Real-Time Communication, WebRTC) architecture, protocol stack, and WebRTC signaling model

### 1. WebRTC architecture

WebRTC is a real-time communication technology, and allows a network application or a site to establish a peer-to-peer (peer-to-peer, P2P) connection between browsers without using an intermediate medium, to implement transmission of a video stream and (or) an audio stream or any other data.

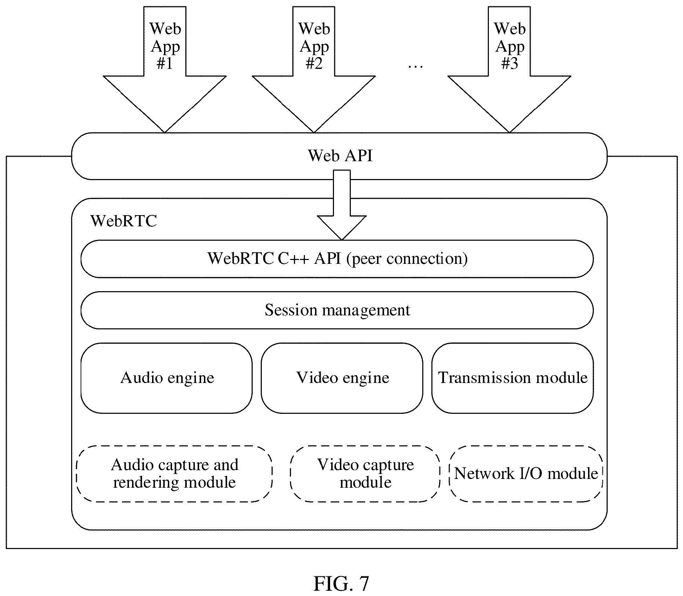

FIG. 7 is a diagram of the WebRTC architecture. Web App is a Web application developed by an application developer. The application developer can develop a real-time audio/video communication application based on a browser integrated with a WebRTC API. The Web application is software running on a Web browser, and uses a standard browser as a client. The Web application may be understood as a hypertext markup language (hypertext markup language, HTML) web page, and is usually written in a hybrid form of HTML5, a cascading style sheets (cascading style sheets, CSS), and an interpreted language JavaScript.

The WebRTC includes several interrelated APIs and protocols to achieve this goal. A Web API layer includes APIs exposed through the WebRTC for application layer developers. The APIs are mainly JavaScript APIs, and are provided for the Web application. The application developer does not need to care about complex underlying technologies, and needs to understand only a general procedure and principles of the WebRTC and invoke the WebRTC API to easily develop a Web application similar to network video chat software.

A WebRTC C++ API layer includes APIs used by a browser to support a WebRTC specification. A main function is to expose core WebRTC functions, for example, a device function and audio/video stream data collection, so that browser producers can integrate the functions into their own applications. A peer connection (peer connection) is a core module of the WebRTC C++ API layer, and implements functions such as P2P hole drilling, communication link establishment and selection, stream data transmission, non-audio/video data transmission, and reporting and statistics of transmission quality.

A session management (session management) layer provides a session function management function, and may create a session, manage the session, manage a context environment, and the like. This layer relates to various protocols, for example, an SDP protocol of a signaling server, and is mainly used for signaling exchange and management of a connection status of an RTC peer connection.

An engine layer defines an audio (audio) engine, a video (video) engine, and a transmission module, and may be used to process audio and video and perform transmission of a file.

A driver layer includes an audio capture and rendering module, a video capture module, and a network input/output (input/output, I/O) module.

### 2. WebRTC protocol stack

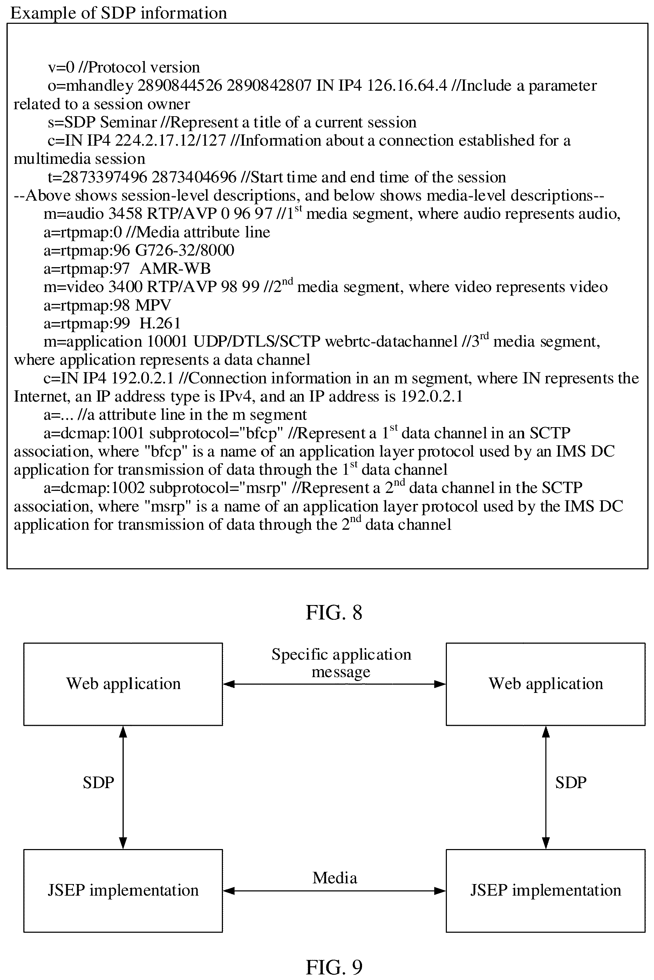

A data channel in the WebRTC protocol stack may be implemented by using a UDP/DTLS/SCTP protocol stack. In a process of establishing a session, a calling terminal device and a called terminal device need to perform media negotiation, so that both the communication parties can agree on a media stream and a coding scheme. The WebRTC does not specify a specific signaling protocol, but the SDP protocol is used for media negotiation. The SDP protocol is used to transfer necessary session messages to session participants, and defines a unified format of a session description. SDP information includes two parts: One part is general session information, including information such as a session name, a contact address, and time, and is referred to as a session-level description. The other part is session media information, including information such as a media type, a transportation protocol, an encoding format, and a transportation address, and is referred to as a media-level description. FIG. 8 is an example of the SDP information, and a third media segment may be referred to as an m segment or a DC m segment. In embodiments of this application, content after "//" is an explanation of a meaning of each parameter, and is not content of the SDP information. "a=..." represents one or more a attribute lines in the m segment, and a part of the a attribute lines are SCTP association-level attributes. An "a=dcmap" line represents a data channel-level attribute.

### 3. WebRTC signaling model

The WebRTC also uses the offer/answer model shown in FIG. 4 to exchange the SDP information.

A JavaScript session establishment protocol (JavaScript session establishment protocol) defines a mechanism for controlling a multimedia session signaling plane by a WebRTC JavaScript App through an interface specified at the Web API layer. The protocol assumes that the JavaScript App runs in a running environment including the WebRTC API, where the running environment including the WebRTC API is referred to as a "JSEP implementation". A design focus of the WebRTC signaling model is: The WebRTC (the JSEP implementation in FIG. 9, corresponding to the session management layer in FIG. 7) primarily focuses on the media plane, while signaling exchange is left to be implemented as much as possible to applications.

The JSEP implementation maintains a signaling status machine, to indicate a media negotiation status during media negotiation. The JSEP implementation provides an interface needed by the Web application. The Web application invokes the API at correct time to drive the signaling status machine. The JSEP implementation mainly creates, based on information provided by the Web application, an SDP including a media type, a format, and all related media configuration parameters needed for establishing a media path, and processes negotiated local and remote session descriptions.

Different Web applications may use different signaling protocols on a signaling plane/signaling layer, and may exchange media description information with a remote Web application based on standardized signaling protocols preferred by the Web applications, for example, a session initiation protocol (session initiation protocol, SIP), or even signaling protocols defined by the Web applications.

The foregoing WebRTC protocol corresponds to the JSEP implementation. This is specifically embodied as follows: The JSEP implementation is an implementation of the WebRTC injected into the browser, and provides a JavaScript API (corresponding to the Web API in FIG. 7) for the Web application. The Web application is an application running on a browser, and invokes the JavaScript API to implement functions like network video chat.

### II. WebRTC call procedure

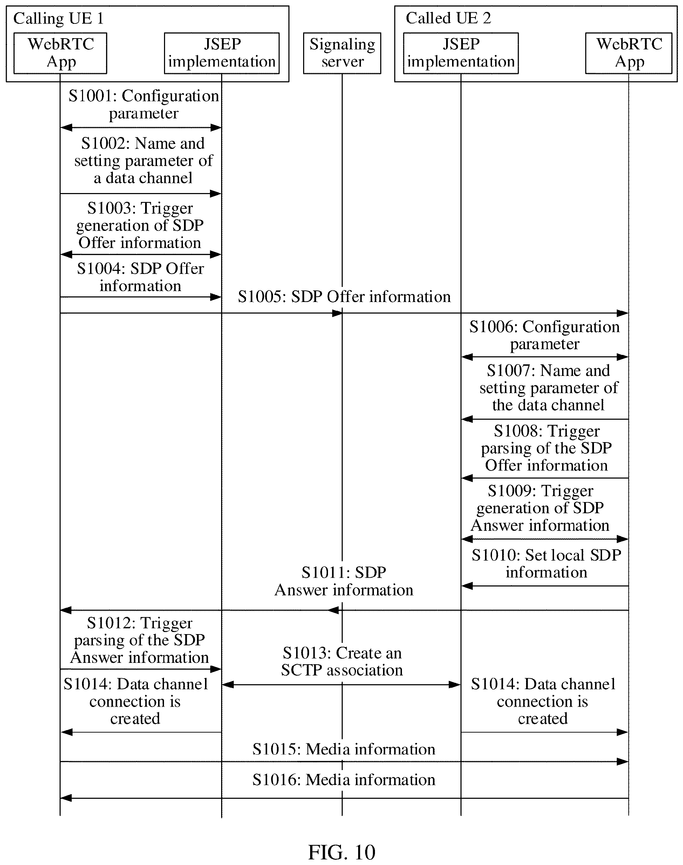

For example, GSMA NG.134 recommends using WebRTC API 1.0 to support an IMS DC. When a user needs to run a WebRTC application, first, both a calling terminal device and a called terminal device need to download the WebRTC application from another Web server. After the WebRTC application is downloaded, browsers of both the calling terminal device and the called terminal device run the same application. When the calling terminal device initiates a call, an end-to-end call procedure is started. FIG. 10 is a diagram of the WebRTC call procedure. Specific steps are as follows.

S1001: When a calling UE 1 starts a WebRTC App and needs to perform media Offer/Answer negotiation, the WebRTC App creates a new RTCPeerConnection object by invoking an RTCPeerConnection interface included in a Web API and carrying a configuration parameter, and returns the new RTCPeerConnection object to the WebRTC App. The new RTCPeerConnection object represents a connection between the calling UE 1 and a called UE 2, and the configuration parameter is optional. If the configuration parameter is carried, configuration is performed based on the specified parameter. If no configuration parameter is carried, basic configuration is performed.

The RTCPeerConnection corresponds to a session level of an SDP. One RTCPeerConnection can have only one SCTP association, corresponding to one m segment in the SDP.

S1002: The WebRTC App of the calling party creates an RTCDataChannel object on the existing RTCPeerConnection object by invoking a createDataChannel API included in a Web API layer, and the RTCDataChannel object represents establishment of a bidirectional data channel. Optionally, the WebRTC App carries a name label of the data channel and setting parameters of the data channel. The setting parameters of the data channel include:
(1) ordered: represents whether information about the data channel is transmitted in order, to be specific, whether an arrival sequence needs to be consistent with a sending sequence, and the arrival sequence is consistent with the sending sequence by default;
(2) maxPacketLifeTime: represents maximum period of time of a message retransmission failure in unreliable transmission mode. This may be understood that after the time, a message is no longer transmitted even if the message fails to be retransmitted;
(3) maxRetransmits: represents a maximum quantity of retransmissions for a message that is unsuccessfully retransmitted in unreliable transmission mode, and is exclusive with maxPacketeLifeTime;
(4) protocol: represents a sub-protocol used on the data channel;
(5) negotiated: represents whether the data channel is in-band negotiation or out-of-band negotiation; and
(6) id: represents a stream ID of the data channel.

All data channels on a same RTCPeerConnection share a same SCTP association/same DC media description information/a same DC m segment. Each time a data channel is created, a new data channel or SCTP streams in two directions, corresponding to an a=dcmap attribute line in the m segment, are created on the existing SCTP association.

S1003: The WebRTC App of the calling party triggers, by invoking a createOffer API included in the Web API layer, a JSEP implementation to generate SDP offer information, add the SDP offer information to the current RTCPeerConnection, and return the RTCPeerConnection to the WebRTC App. The SDP offer information includes media description information that needs to be negotiated with the called party. The WebRTC App may carry a part of optional additional information.

When the createOffer API is invoked for the first time, the generated SDP information is referred to as initial SDP offer information. If the createOffer API is invoked after a session is established, the JSEP implementation generates, based on any modification of the session, SDP offer information after the current session is modified, and sends the SDP offer information to the WebRTC App.

S 1004: The WebRTC App of the calling party sends the generated SDP offer information to the JSEP implementation by invoking a setLocalDescription API included in the Web API layer, and triggers the JSEP implementation to parse the SDP offer information and create local resources for receiving and decoding media information. For the DC, a DC setting sending parameter is triggered, to trigger SCTP Streams creation, data source setting, and the like.

S1005: The WebRTC App of the calling party sends the SDP offer information to the WebRTC App of the called party via a signaling server.

S 1006: After the WebRTC App of the called party receives the SDP offer information, the WebRTC App of the called party creates a local RTCPeerConnection object. The WebRTC App creates the local RTCPeerConnection object by invoking the RTCPeerConnection interface included in the Web API and carrying a configuration parameter, and returns the local RTCPeerConnection object to the WebRTC App.

S1007: The WebRTC App of the called party creates an RTCDataChannel object on the created local RTCPeerConnecton object. A carried name label of the data channel and a carried setting parameter of the data channel are negotiated answer information of the data channel for the received SDP offer information.

S 1008: The WebRTC App of the called party triggers, by invoking a setRemoteDescription API included in the Web API layer, a JSEP implementation on the called side to parse the SDP offer information and configure local resources for sending and encoding media information.

S1009: To complete Offer/Answer exchange, the WebRTC App of the called party generates proper SDP answer information by invoking the createAnswer API. The SDP answer information includes a codec supported by any media or browser connected to the session.

S1010: The WebRTC App of the called party sets local SDP information by invoking a setLocalDescription API included in the Web API layer, to configure local resources for receiving and decoding the media information.

S1011: The WebRTC App of the called party sends the SDP answer information to the WebRTC App of the calling party via the signaling server.

S1012: After receiving the SDP answer information, the WebRTC App of the calling party sends the SDP Answer to the JSEP implementation by invoking a setRemoteDescription API, and triggers the JSEP implementation to parse the SDP Answer and configure local resources for sending and encoding the media information. Initial setting is completed.

S1013: WebRTC user agents (User Agents)/JSEP implementations of the calling party and the called party creates an SCTP/DTLS association and corresponding streams.

S1014: After a data channel connection is created, the JSEP implementation notifies the WebRTC Apps of the calling party and the called party by triggering an onDataChannel() event. This indicates that the data channel connection is created.

S1015 and S1016: The WebRTC Apps of the calling party and the called party send the media information through a send() interface, and receive the media information by triggering an onmessage() event.

A JSEP implementation in a WebRTC architecture cannot interact with an IMS component, and a DC m segment in a WebRTC SDP created by the JSEP implementation cannot be combined into an existing SDP of an IMS, so that media negotiation of a data channel between different communication apparatuses cannot be triggered. Specifically, the following two causes are included.
1. In a WebRTC design mechanism, signaling exchange is implemented by an application layer, and the JSEP implementation cannot interact with the IMS component, and the WebRTC SDP cannot be sent to the IMS component. Consequently, the DC m segment in the WebRTC SDP created by the JSEP implementation cannot be combined with the existing SDP of the IMS.
2. The WebRTC SDP generated by the JSEP implementation is based on a WebRTC protocol. In a WebRTC session, only one DC m segment can be created, and all DCs share the DC m segment. The WebRTC SDP does not comply with an IMS standard protocol, and specific causes are as follows.
   (1) When a WebRTC App establishes DCs with different terminal devices, for example, separately establishes data channels with a peer terminal device and a network, each connection/SCTP association corresponds to an independent session, and each connection/SCTP association has a corresponding independent session context. For each connection, the WebRTC App uses a WebRTC API to create an RTCPeerConnection object (corresponding to a session and an SCTP association) and one or more DataChannel objects. It may be understood that, for each connection/SCTP coupling, each WebRTC App has an independent WebRTC SDP, and the WebRTC SDP includes a DC m segment. The WebRTC protocol does not support one session context/WebRTC SDP including m segments of DCs established between a same terminal device and different peer terminal devices.
   (2) The WebRTC protocol does not support a 3gpp-qos-hint parameter.
   (3) Each WebRTC App uses an independent session context. A plurality of WebRTC Apps are not supported in sharing a same session context/WebRTC SDP.

Therefore, embodiments of this application provide a media negotiation method, so that an IMS DC application can trigger, by invoking a WebRTC API, a JSEP implementation to generate description information of a media resource of a DC, and send the information to an IMS component, to provide a media negotiation service for a data channel for the IMS DC application. In addition, different IMS DC applications can share one IMS session context, a same terminal device is supported in establishing DCs with a plurality of peer terminal devices in one IMS session context, and the IMS DC application is supported in specifying a quality of service parameter of the DC.

With reference to the accompanying drawings, the following describes in detail the media negotiation method and a communication apparatus provided in this application.

A specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be a core network device and a terminal device, or a functional module that can invoke and execute the program in the core network device or the terminal device.

For ease of understanding of embodiments of this application, the following descriptions are provided.

First, in this application, "indicate" may be understood as "enable", and "enable" may include "directly enable" and "indirectly enable". When one piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in a plurality of manners, for example, but not limited to, the to-be-enabled information may be directly enabled, for example, the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and another part of the to-be-enabled information is known or agreed in advance. For example, specific information may be enabled through a pre-agreed (for example, specified in a protocol) sequence of all information, to reduce enabling overheads to some extent. In addition, a common part of all the information may be identified and enabled in a unified manner, to reduce enabling overheads caused by enabling the same information separately.

Second, "first", "second", and various numeric numbers (for example, "#1" and "#2") shown in this application are merely intended to distinguish between objects for ease of description, but not to limit the scope of embodiments of this application, for example, are used to distinguish between different messages, but are not for describing a particular order or sequence. It should be understood that the objects described in such a way are interchangeable in a proper circumstance, so that a solution other than embodiments of this application can be described.

Third, the terms "include", "have", and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to such a process, method, product, or device.

Fourth, in this application, "preconfiguration" may include "predefinition", for example, definition in a protocol. The "predefinition" may be implemented in a manner of prestoring corresponding code, a table, or other related information that may be used for indication in a device (for example, including network elements). A specific implementation thereof is not limited in this application.

Fifth, "save" in embodiments of this application may be storage in one or more memories. The one or more storages may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Sixth, "protocol" in embodiments of this application may be a standard protocol in the communication field, for example, may include a 4G/5G protocol, a new radio (new radio, NR) protocol, and a related protocol applied to a future communication system. This is not limited in this application.

Seventh, in the method flowcharts in the accompanying drawings of the specification of this application, dashed-line boxes represent optional steps.

The following describes in detail the media negotiation method provided in embodiments of this application by using interaction between network elements as an example. It may be understood that, for terms and steps in embodiments of this application, refer to each other.

FIG. 11 is an example of an architectural diagram of a terminal device supporting an IMS DC according to an embodiment of this application. An IMS DC application can interact with a WebRTC API or a framework layer. An IMS component/the framework layer includes an IMS service 1101, a DC 1102, and a modem 1103 in FIG. 11.

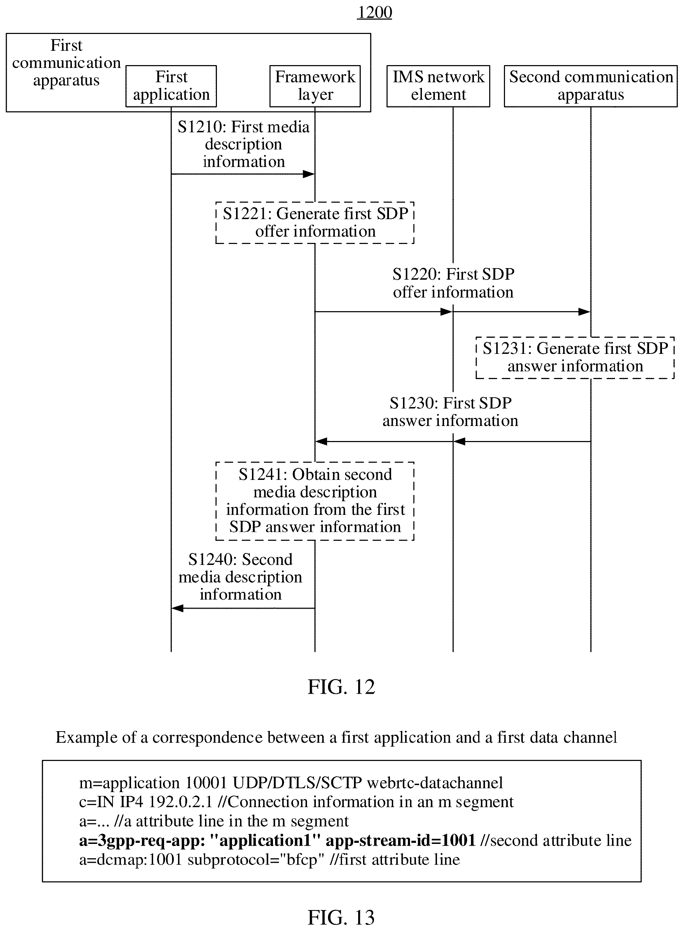

FIG. 12 is an example flowchart of a media negotiation method 1200 according to an embodiment of this application. In the method 1200, a framework layer includes an IMS component, or the framework layer includes the IMS component and an IMS DC signaling module. A first application and a second application are IMS DC applications, and media description information of a data channel is referred to as an m segment.

S1210: The first application sends first media description information to the framework layer. The first media description information is description information, offered by the first application, of a media resource of a first data channel, the first data channel is a channel between a first communication apparatus and a second communication apparatus for transmission of application data generated or consumed by the first application, and both the framework layer and the first application run on the first communication apparatus. Correspondingly, the framework layer receives the first media description information from the first application. For example, the first application sends the first media description information to the framework layer by invoking an IMS DC signaling API. Optionally, the first communication apparatus is a first terminal device, and the first terminal device is a calling terminal device.

For example, the first application triggers, by invoking a createOffer API included in a Web API layer, a JSEP implementation to generate second SDP offer information. The second SDP offer information includes the first media description information. The first application sends the second SDP offer information to the framework layer. After the framework layer receives the second SDP offer information from the first application, the framework layer obtains the first media description information from the second SDP offer information. For a specific implementation in which the first application running on the first communication apparatus triggers the JSEP implementation to generate the second SDP offer information, refer to steps S1001 to S1004 in FIG. 10.

S1220: The framework layer sends first SDP offer information to the second communication apparatus via an IMS network element. The first SDP offer information includes the first media description information. Correspondingly, the second communication apparatus receives the first SDP offer information from the framework layer via the IMS network element. Optionally, the second communication apparatus is a second terminal device or a server corresponding to the first application, and the second terminal device or the server corresponding to the first application is a called terminal device.

Optionally, the IMS network element includes a P-CSCF network element. The IMS network element is one or more IMS network elements in an IMS network, and a 1^{st} IMS network element that interacts with the framework layer in the IMS network is the P-CSCF network element. For example, the framework layer sends the first SDP offer information to the second communication apparatus via the one or more IMS network elements in the IMS network, and the second communication apparatus receives the first SDP offer information from the framework layer via the one or more IMS network elements in the IMS network.

For example, the first SDP offer information further includes third media description information and/or fourth media description information. The third media description information is description information that is of a media resource of an audio channel and that is offered by the framework layer, and the audio channel is used for transmission of audio data of a call service of the first communication apparatus. The fourth media description information is description information, offered by the framework layer, of a media resource of a video channel for transmission of video data of the call service of the first communication apparatus. It may be understood that the first SDP offer information includes the first media description information; or the first SDP offer information includes the first media description information and the third media description information; or the first SDP offer information includes the first media description information and the fourth media description information; or the first SDP offer information includes the first media description information, the third media description information, and the fourth media description information. In this example, the framework layer running on the first communication apparatus may combine the description information (the first media description information) of the media resource of the first data channel, the description information (the third media description information) of the media resource of the audio channel, and/or the description information (the fourth media description information) of the media resource of the video channel into the first SDP offer information, and send the first SDP offer information to the second communication apparatus.

One IMS session may support a plurality of applications, or may support only one IMS DC application. When the IMS session supports the only one IMS DC application, and the second communication apparatus has downloaded the first application, the framework layer does not need to indicate a correspondence between the first application and the first data channel to the second communication apparatus. When the IMS session supports the only one IMS DC application, and the second communication apparatus has not downloaded the first application, the framework layer needs to indicate the correspondence between the first application and the first data channel to the second communication apparatus, so that the second communication apparatus can download the first application based on the correspondence between the first application and the first data channel. When the IMS session supports the plurality of IMS DC applications, the framework layer needs to indicate the correspondence between the first application and the first data channel to the second communication apparatus, so that the second communication apparatus can learn of a specific application that uses the first data channel.

Optionally, if the IMS session supports the only one IMS DC application, and the second communication apparatus has not downloaded the first application, or the IMS session supports the plurality of IMS DC applications, the first SDP offer information sent by the framework layer indicates the correspondence between the first application and the first data channel. The first SDP offer information indicates the correspondence between the first application and the first data channel in the following two implementations.

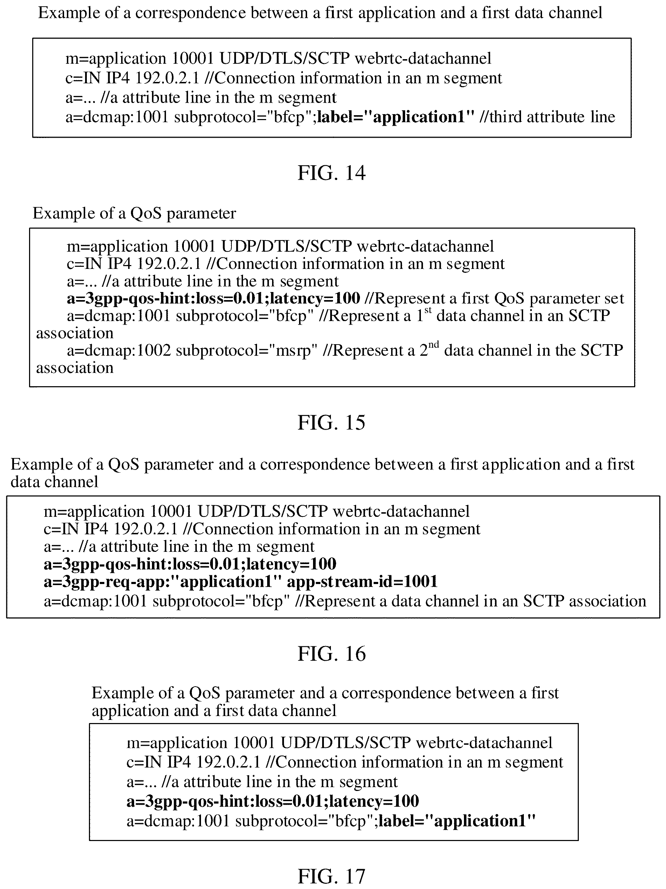

In an implementation, the first media description information includes a first attribute line and a second attribute line. The first attribute line includes parameter information of the first data channel, and the parameter information of the first data channel includes an identifier of the first data channel. The second attribute line includes the identifier of the first data channel and an identifier of the first application. The first attribute line is an a=dcmap attribute line, and the second attribute line is an a=3gpp-req-app attribute line. FIG. 13 is an example of the correspondence between the first application and the first data channel. The identifier of the first application is application1, and the identifier of the first data channel is 1001. In another implementation, the first media description information includes a third attribute line. The third attribute line includes parameter information of the first data channel and an identifier of the first application, and the parameter information of the first data channel includes an identifier of the first data channel. The third attribute line is an a=dcmap attribute line. FIG. 14 is another example of the correspondence between the first application and the first data channel. The identifier of the first application is application1, and the identifier of the first data channel is 1001.

Optionally, the first application sends a first QoS parameter set to the framework layer. The first QoS parameter set includes at least one QoS parameter, offered by the first application, of the first data channel. Correspondingly, the framework layer receives the first QoS parameter set from the first application. In this case, the first SDP offer information further indicates a correspondence between the first QoS parameter set and the first media description information.

For example, the first media description information includes the first QoS parameter set. For example, the first media description information includes a fourth attribute line, and the fourth attribute line includes the at least one QoS parameter in the first QoS parameter set. For example, the fourth attribute line is an a=3gpp-qos-hint attribute line. For example, the at least one QoS parameter includes a packet loss rate and a latency. FIG. 15 is an example of the QoS parameter. The latency that is offered by the first application and that is about the first data channel is 100 milliseconds (ms), and the loss is 0.01%.

When the first SDP offer information indicates the correspondence between the first application and the first data channel and the correspondence between the first QoS parameter set and the first media description information, and the first media description information includes the first attribute line and the second attribute line, an example of the QoS parameter and the correspondence between the first application and the first data channel is shown in FIG. 16. When the first SDP offer information includes the correspondence between the first application and the first data channel and the correspondence between the first QoS parameter set and the first media description information, and the first media description information includes the third attribute line, another example of the QoS parameter and the correspondence between the first application and the first data channel is shown in FIG. 17.

For example, the first SDP offer information further includes seventh media description information. The seventh media description information is description information of a media resource of a second data channel, and the second data channel is a channel between the first communication apparatus and the second communication apparatus or between the first communication apparatus and a third communication apparatus for transmission of the application data generated or consumed by the first application or transmission of application data generated or consumed by a second application. When the first SDP offer information further indicates the correspondence between the first QoS parameter set and the first media description information, the first media description information and the seventh media description information are respectively included in a first m segment and a second m segment in the first SDP offer information. It may be understood that the seventh media description information and the first media description information are included in different m segments in the first SDP offer information. Because the first application offers the at least one QoS parameter of the first data channel, the first media description information of the first data channel and the seventh media description information of the second data channel cannot share a same m segment in the first SDP offer information. Based on this example, when the second data channel is for transmission of the application data generated or consumed by the second application between the first communication apparatus and the second communication apparatus, different IMS DC applications can share one IMS session context. When the second data channel is for transmission of the application data generated or consumed by the first application or the second application between the first communication apparatus and the third communication apparatus, a same communication apparatus can be supported in establishing data channels with a plurality of peer communication apparatuses in one IMS session context.

Optionally, the first application sends first indication information to the framework layer. The first indication information indicates that the first data channel uses an independent bearer. The independent bearer means that the first data channel and another data channel are not in a same SCTP association, and the another data channel is a data channel other than the first data channel. The another data channel may be a data channel that is other than the first data channel and that the first application needs to create, or may be a data channel that another application needs to create. Correspondingly, the framework layer further receives the first indication information from the first application. The first indication information indicates that the first data channel uses the independent bearer, so that the bearer of the first application can be independently disabled, thereby saving network resources. In addition, the first application does not preempt a network resource with the another application.

For example, the first SDP offer information further includes seventh media description information. The seventh media description information is description information of a media resource of a second data channel, and the second data channel is a channel between the first communication apparatus and the second communication apparatus or between the first communication apparatus and a third communication apparatus for transmission of the application data generated or consumed by the first application or transmission of application data generated or consumed by a second application. When the framework layer receives first indication information from the first application, the first media description information and the seventh media description information are respectively included in a first m segment and a second m segment in the first SDP offer information. It may be understood that the seventh media description information and the first media description information are included in different m segments in the first SDP offer information.

For example, the first SDP offer information further includes seventh media description information. The seventh media description information is description information of a media resource of a second data channel, and the second data channel is a channel between the first communication apparatus and the second communication apparatus or between the first communication apparatus and a third communication apparatus for transmission of the application data generated or consumed by the first application or transmission of application data generated or consumed by a second application. When the first SDP offer information does not indicate the correspondence between the first QoS parameter set and the first media description information, and the framework layer does not receive first indication information from the first application, the first media description information and the seventh media description information are included in a fifth m segment in the first SDP offer information. It may be understood that the seventh media description information and the first media description information are included in a same m segment in the first SDP offer information.

Optionally, before S1220, the framework layer generates the first SDP offer information based on the first media description information. The following provides an example for description with reference to S1221.

Optionally, in S1221, the framework layer generates the first SDP offer information based on at least one of the first media description information, the first QoS parameter set, and the first indication information that are from the first application, or a quantity of IMS DC applications supported by one IMS session.

For example, when the IMS session supports the only one IMS DC application, and the second communication apparatus has not downloaded the first application, the framework layer generates the first SDP offer information based on the first media description information. The first SDP offer information includes the first media description information, and the first SDP offer information indicates the correspondence between the first application and the first data channel.

For example, when the IMS session supports the plurality of IMS DC applications, the framework layer generates the first SDP offer information based on the first media description information. The first SDP offer information includes the first media description information, and the first SDP offer information indicates the correspondence between the first application and the first data channel.

For example, if the framework layer has received the first QoS parameter set from the first application, and the first QoS parameter set includes the at least one QoS parameter, offered by the first application, of the first data channel, the framework layer generates the first SDP offer information. The first SDP offer information includes the first media description information, and the first SDP offer information indicates the correspondence between the first QoS parameter set and the first media description information.

For example, if the IMS session supports the plurality of IMS DC applications, the framework layer has received the first QoS parameter set from the first application, and the first QoS parameter set includes the at least one QoS parameter, offered by the first application, of the first data channel, the framework layer generates the first SDP offer information. The first SDP offer information includes the first media description information, and the first SDP offer information indicates the correspondence between the first application and the first data channel and the correspondence between the first QoS parameter set and the first media description information.

For example, if the framework layer determines that the seventh media description information already exists, the framework layer has received the first indication information from the first application, and the first indication information indicates that the first data channel uses the independent bearer, the framework layer generates the first SDP offer information. The first SDP offer information includes the seventh media description information and the first media description information, and the first media description information and the seventh media description information are respectively included in the first m segment and the second m segment in the first SDP offer information.

For example, if the framework layer determines that the seventh media description information already exists, the framework layer has received the first QoS parameter set from the first application, and the first QoS parameter set includes the at least one QoS parameter, offered by the first application, of the first data channel, the framework layer generates the first SDP offer information. The first SDP offer information includes the seventh media description information and the first media description information, and the first SDP offer information further indicates the correspondence between the first QoS parameter set and the first media description information. The first media description information and the seventh media description information are respectively included in the first m segment and the second m segment in the first SDP offer information.

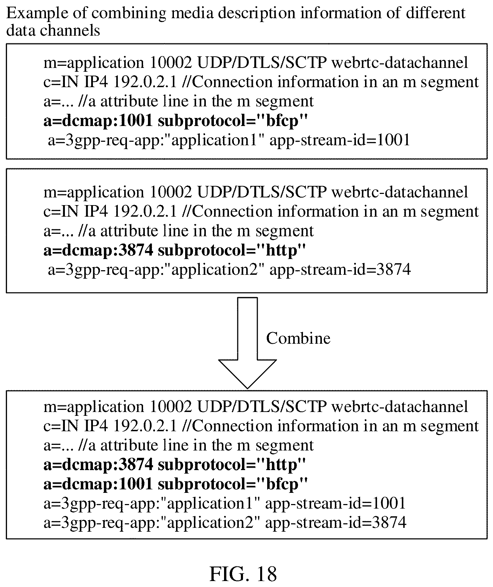

For example, if the framework layer determines that the seventh media description information already exists, and the framework layer neither receives the first indication information from the first application nor receives the first QoS parameter set from the first application, the framework layer may combine the seventh media description information with the first media description information, to generate the first SDP offer information. The first SDP offer information includes the seventh media description information and the first media description information, and the first media description information and the seventh media description information are included in the fifth m segment in the first SDP offer information. FIG. 18 is an example of combining media description information of different data channels. The identifier of the first data channel is 1001, an identifier of the second data channel is 3874, the identifier of the first application is application1, and an identifier of the second application is application2.

For example, if the framework layer determines that the third media description information and/or the fourth media description information already exist/exists, the framework layer generates the first SDP offer information. The first SDP offer information includes the first media description information, the third media description information, and/or the fourth media description information.

S1230: The second communication apparatus sends first SDP answer information to the framework layer via the IMS network element. The first SDP answer information includes second media description information, and the second media description information is an answer of the second communication apparatus to the first media description information. Correspondingly, the framework layer receives the first SDP answer information from the second communication apparatus via the IMS network element.

Optionally, before S1230, the second communication apparatus generates the first SDP answer information. The following provides an example for description with reference to S1231.

Optionally, in S1231, the second communication apparatus generates the first SDP answer information based on the first SDP offer information from the framework layer. The first SDP offer information includes the first media description information, and the first SDP answer information includes the second media description information.

Optionally, when the first SDP offer information indicates the correspondence between the first application and the first data channel, the first SDP answer information also indicates the correspondence between the first application and the first data channel. The first SDP answer information indicates the correspondence between the first application and the first data channel in the following two implementations.

In an implementation, the second media description information includes the first attribute line and the second attribute line. The first attribute line includes the parameter information of the first data channel, and the parameter information of the first data channel includes the identifier of the first data channel. The second attribute line includes the identifier of the first application and the identifier of the first data channel.

In another implementation, the second media description information includes the third attribute line. The third attribute line includes the parameter information of the first data channel and the identifier of the first application, and the parameter information of the first data channel includes the identifier of the first data channel.

Optionally, when the first SDP offer information further indicates the correspondence between the first QoS parameter set and the first media description information, the first SDP answer information further indicates a correspondence between a second QoS parameter set and the second media description information. The second QoS parameter set is an answer of the second communication apparatus to the first QoS parameter set. For example, the second media description information includes the second QoS parameter set. For example, the second media description information includes the fourth attribute line, and the fourth attribute line includes at least one QoS parameter in the second QoS parameter set.

Optionally, when the first media description information and the seventh media description information are respectively included in the first m segment and the second m segment in the first SDP offer information, the second media description information and eighth media description information are respectively included in a third m segment and a fourth m segment in the first SDP answer information, and the eighth media description information is an answer to the seventh media description information.

Optionally, when the first media description information and the seventh media description information are respectively included in the fifth m segment in the first SDP offer information, the second media description information and eighth media description information are respectively included in a sixth m segment in the first SDP answer information, and the eighth media description information is an answer to the seventh media description information.

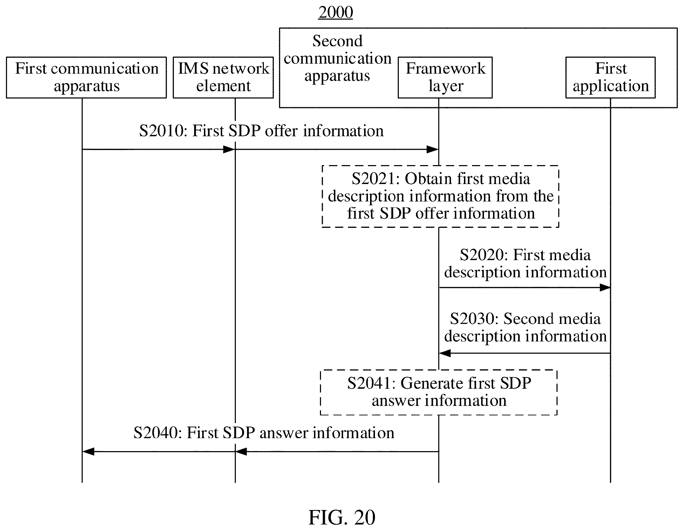

For a specific example of generating the first SDP answer information by the second communication apparatus, refer to a specific example of step S2041 in FIG. 20. Details are not described herein.

S1240: The framework layer sends the second media description information to the first application. Correspondingly, the first application receives the second media description information from the framework layer.

According to the technical solution provided in this embodiment of this application, the first application (IMS DC application) running on the first communication apparatus may send, to the framework layer/IMS component running on the first communication apparatus, the description information (first media description information) that is of the media resource of the first data channel and that is offered by the first application. The framework layer may send the first SDP offer information including the first media description information to the second communication apparatus. After receiving the first SDP offer information, the second communication apparatus may send the first SDP answer information including the second media description information to the framework layer. The second media description information is the answer of the second communication apparatus to the first media description information. In this way, a media negotiation service of the data channel can be provided for the IMS DC application. In addition, in this embodiment of this application, different IMS DC applications (the first application and the second application) can share one IMS session context, the first communication apparatus is supported in establishing data channels with a plurality of peer communication apparatuses (the second communication apparatus and the third communication apparatus) in the IMS session context, and the IMS DC application is supported in specifying a quality of service parameter of the data channel.

Optionally, before S1240, the framework layer obtains the second media description information from the first SDP answer information. The following provides an example for description with reference to S1241.

Optionally, in S1241, the framework layer obtains the second media description information from the first SDP answer information from the second communication apparatus.

For example, if the first SDP answer information includes the second media description information, fifth media description information, and/or sixth media description information, the framework layer directly obtains the second media description information from the first answer information. The fifth media description information is an answer to the third media description information, and the sixth media description information is an answer to the fourth media description information by the second communication apparatus. Based on this example, the second communication apparatus may combine the second media description information, the fifth media description information, and/or the sixth media description information into the first SDP answer information, and send the first SDP answer information to the framework layer running on the first communication apparatus.

For example, if the first SDP answer information includes the second media description information and indicates the correspondence between the first application and the first data channel, because the second media description information and information indicating the correspondence between the first application and the first data channel are included in a same m segment in the first SDP answer information, the framework layer deletes the information indicating the correspondence between the first application and the first data channel from the m segment, to obtain the second media description information.

For example, if the first SDP answer information includes the second media description information and indicates the correspondence between the second QoS parameter set and the second media description information, because the second media description information and information indicating the correspondence between the second QoS parameter set and the second media description information are included in a same m segment in the first SDP answer information, the framework layer deletes the information indicating the correspondence between the second QoS parameter set and the second media description information from the m segment, to obtain the second media description information.

For example, if the first SDP answer information includes the second media description information and indicates the correspondence between the first application and the first data channel and the correspondence between the second QoS parameter set and the second media description information, because the second media description information, information indicating the correspondence between the first application and the first data channel, and information indicating the correspondence between the second QoS parameter set and the second media description information are included in a same m segment in the first SDP answer information, the framework layer deletes the information indicating the correspondence between the first application and the first data channel and the information indicating the correspondence between the second QoS parameter set and the second media description information from the m segment, to obtain the second media description information.

For example, if the first SDP answer information includes the second media description information and the eighth media description information, and the second media description information and the eighth media description information are included in different m segments in the first SDP answer information, the framework layer obtains the second media description information from the first SDP answer information. The eighth media description information is the answer of the second communication apparatus to the seventh media description information.

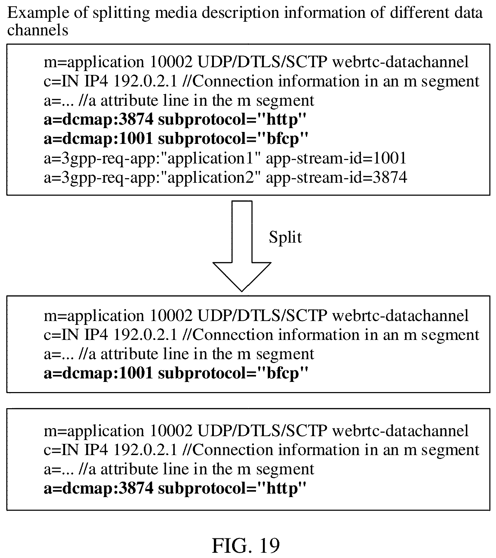

For example, if the first SDP answer information includes the second media description information and the eighth media description information, and the second media description information and the eighth media description information are included in a same m segment in the first SDP answer information, the framework layer removes an a=dcmap line corresponding to the eighth media description information from the m segment, to obtain the second media description information. FIG. 19 is an example of splitting media description information of different data channels. The identifier of the first data channel is 1001, the identifier of the second data channel is 3874, the identifier of the first application is application1, and the identifier of the second application is application2.

After the second communication apparatus obtains the first SDP offer information, and the first communication apparatus obtains the first SDP answer information, the first communication apparatus and the second communication apparatus may create an SCTP association, and send and/or receive media information through the data channel. For a specific procedure, refer to step S1012 to step S1016 in FIG. 10.

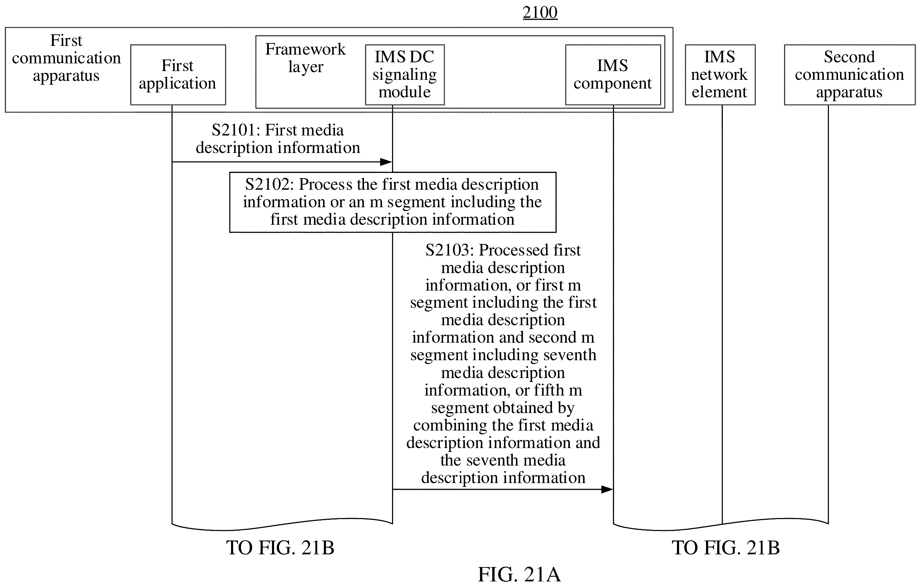

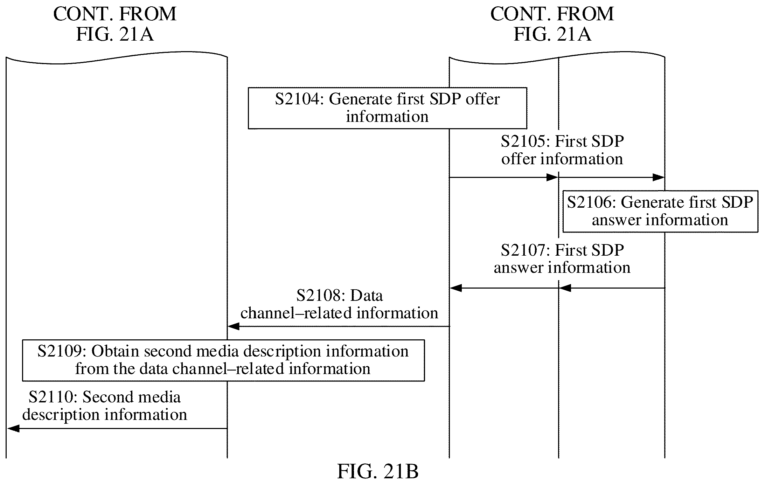

Optionally, the framework layer includes the IMS component and the IMS DC signaling module. For example, the IMS DC signaling module of the framework layer receives the first media description information from the first application. The IMS DC signaling module sends the first media description information to the IMS component. The IMS component of the framework layer sends the first SDP offer information to the second communication apparatus via the IMS network element. The first SDP offer information includes the first media description information. The IMS component of the framework layer receives the first SDP answer information from the second communication apparatus via the IMS network element. The first SDP answer information includes the second media description information. The IMS component sends the second media description information to the IMS DC signaling module. The IMS DC signaling module sends the second media description information to the first application. For a specific example flowchart, refer to FIG. 21A and FIG. 21B.

FIG. 20 is another example flowchart of a media negotiation method 2000 according to an embodiment of this application. In the method 2000, a framework layer includes an IMS component, or the framework layer includes the IMS component and an IMS DC signaling module. A first application and a second application are IMS DC applications, and media description information of a data channel is referred to as an m segment.

S2010: A first communication apparatus sends first SDP offer information to the framework layer via an IMS network element. The first SDP offer information includes first media description information. The first media description information is description information of a media resource of a first data channel, the first data channel is a channel used for transmission of application data generated or consumed by a first application between the first communication apparatus and a second communication apparatus, and the framework layer runs on the second communication apparatus. Optionally, the first application also runs on the second communication apparatus. Correspondingly, the framework layer receives the first SDP offer information from the first communication apparatus via the IMS network element.

Optionally, the first communication apparatus is a first terminal device, and the first terminal device is a calling terminal device. The second communication apparatus is a second terminal device or a server corresponding to the first application, and the second terminal device or the server corresponding to the first application is a called terminal device.

Optionally, the IMS network element includes a P-CSCF network element. The IMS network element is one or more IMS network elements in an IMS network, and a 1^{st} IMS network element that interacts with the first communication apparatus in the IMS network is the P-CSCF network element. For example, the first communication apparatus sends the first SDP offer information to the framework layer via the one or more IMS network elements in the IMS network, and the framework layer receives the first SDP offer information from the first communication apparatus via the one or more IMS network elements in the IMS network.

For example, the first SDP offer information further includes third media description information and/or fourth media description information. The third media description information is description information, offered by the first communication apparatus, of a media resource of an audio channel for transmission of audio data of a call service of the first communication apparatus. The fourth media description information is description information, offered by the first communication apparatus, of a media resource of a video channel for transmission of video data of the call service of the first communication apparatus.

Optionally, the first SDP offer information indicates a correspondence between the first application and the first data channel. For example, the first media description information includes a first attribute line and a second attribute line. The first attribute line includes parameter information of the first data channel, and the parameter information of the first data channel includes an identifier of the first data channel. The second attribute line includes the identifier of the first data channel and an identifier of the first application. The first attribute line is an a=dcmap attribute line, and the second attribute line is an a=3gpp-req-app attribute line. For example, the first media description information includes a third attribute line. The third attribute line includes parameter information of the first data channel and an identifier of the first application, and the parameter information of the first data channel includes an identifier of the first data channel. The third attribute line is an a=dcmap attribute line.

Optionally, the first SDP offer information further indicates a correspondence between a first QoS parameter set and the first media description information. For example, the first media description information includes the first QoS parameter set. For example, the first media description information includes a fourth attribute line, and the fourth attribute line includes the at least one QoS parameter in the first QoS parameter set. For example, the at least one QoS parameter includes a packet loss rate and a latency. For example, the fourth attribute line is an a=3gpp-qos-hint attribute line.

For example, the first SDP offer information further includes seventh media description information. The seventh media description information is description information of a media resource of a second data channel, and the second data channel is a channel between the first communication apparatus and the second communication apparatus or between the first communication apparatus and a third communication apparatus for transmission of the application data generated or consumed by the first application or transmission of application data generated or consumed by a second application. The first media description information and the seventh media description information are respectively included in a first m segment and a second m segment in the first SDP offer information. It may be understood that the first media description information and the seventh media description information are included in different m segments in the first SDP offer information. Alternatively, the first media description information and the seventh media description information are included in a fifth m segment in the first SDP offer information. It may be understood that the first media description information and the seventh media description information are included in a same m segment in the first SDP offer information.

S2020: The framework layer sends the first media description information to the first application. Correspondingly, the first application receives the first media description information from the framework layer.

For example, if the second communication apparatus has not downloaded the first application when the framework layer receives the first SDP offer information, the second communication apparatus downloads the first application based on the correspondence that is between the first application and the first data channel and that is indicated by the first SDP offer information. After the second communication apparatus downloads the first application, the framework layer sends the first media description information to the first application. For example, if the second communication apparatus has downloaded the first application when the framework layer receives the first SDP offer information, the framework layer directly sends the first media description information to the first application.

Optionally, before S2020, the framework layer obtains the first media description information from the first SDP offer information from the first communication apparatus.

Optionally, in S2021, the framework layer obtains the first media description information from the first SDP offer information.

For example, if the first SDP offer information includes the first media description information, the third media description information, and/or the fourth media description information, the framework layer directly obtains the first media description information from the first offer information.

For example, if the first SDP offer information includes the first media description information and indicates the correspondence between the first application and the first data channel, because the first media description information and first indication information are included in a same m segment in the first SDP offer information, the framework layer deletes information indicating the correspondence between the first application and the first data channel from the m segment, to obtain the first media description information.

For example, if the first SDP offer information includes the first media description information and indicates the correspondence between the first QoS parameter set and the first media description information, because the first media description information and information indicating the correspondence between the first QoS parameter set and the first media description information are included in a same m segment in the first SDP offer information, the framework layer deletes the information indicating the correspondence between the first QoS parameter set and the first media description information from the m segment, to obtain the first media description information.

For example, if the first SDP offer information includes the first media description information and indicates the correspondence between the first application and the first data channel and the correspondence between the first QoS parameter set and the first media description information, because the first media description information, information indicating the correspondence between the first application and the first data channel, and information indicating the correspondence between the first QoS parameter set and the first media description information are included in a same m segment in the first SDP offer information, the framework layer deletes the information indicating the correspondence between the first application and the first data channel and the information indicating the correspondence between the first QoS parameter set and the first media description information from the m segment, to obtain the first media description information.

For example, if the first SDP offer information includes the first media description information and the seventh media description information, and the first media description information and the seventh media description information are respectively included in the first m segment and the second m segment in the first SDP offer information, it may be understood that the first media description information and the seventh media description information are included in different m segments in the first SDP offer information, the framework layer obtains the first media description information from first offer information.

For example, if the first SDP offer information includes the first media description information and the seventh media description information, and the first media description information and the seventh media description information are included in the fifth m segment in the first SDP offer information, it may be understood that the first media description information and the seventh media description information are included in a same m segment in the first SDP offer information, the framework layer removes an a=dcmap line corresponding to the seventh media description information from the m segment, to obtain the first media description information.

S2030: The first application sends second media description information to the framework layer. The second media description information is an answer of the first application running on the second communication apparatus to the first media description information. Alternatively, the second media description information may be understood as an answer of the second communication apparatus to the first media description information. For example, the first application sends the second media description information to the framework layer by invoking an IMS DC signaling API. Correspondingly, the framework layer receives the second media description information from the first application.

For example, the first application triggers, based on the first media description information and by invoking a createOffer API included in a Web API layer, a JSEP implementation to generate second SDP answer information. The second SDP answer information includes the second media description information. The first application sends the second SDP answer information to the framework layer. After the framework layer receives the second SDP answer information from the first application, the framework layer obtains the second media description information from the second SDP answer information. For a specific implementation in which the first application running on the second communication apparatus triggers the JSEP implementation to generate the second SDP answer information, refer to steps S1006 to S1009 in FIG. 10. S2040: The framework layer sends first SDP answer information to the first communication apparatus via the IMS network element. The first SDP answer information includes the second media description information. Correspondingly, the first communication apparatus receives the first SDP answer information from the framework layer via the IMS network element.

In the foregoing technical solution provided in this embodiment of this application, after receiving, from the first communication apparatus, the first SDP offer information including the first media description information, the framework layer/the IMS component running on the second communication apparatus may send the first media description information to the first application (IMS DC application) running on the second communication apparatus. After receiving the first media description information, the first application sends the second media description information to the framework layer. The second media description information is the answer to the first media description information. The framework layer may send the first SDP answer information including the second media description information to the first communication apparatus. In this way, a media negotiation service of the data channel can be provided for the IMS DC application.

Optionally, before S2040, the second communication apparatus generates the first SDP answer information. The following provides an example for description with reference to S2041.

Optionally, in S2041, the second communication apparatus generates the first SDP answer information based on the first SDP offer information from the framework layer. The first SDP offer information includes the first media description information, and the first SDP answer information includes the second media description information.

For example, if the first SDP offer information further includes the third media description information and/or the fourth media description information, the first SDP answer information generated by the second communication apparatus further includes fifth media description information and/or sixth media description information. The fifth media description information is an answer of the second communication apparatus to the third media description information, and the sixth media description information is an answer of the second communication apparatus to the fourth media description information.

For example, if the first SDP offer information further indicates the correspondence between the first application and the first data channel, the first SDP answer information generated by the second communication apparatus further indicates the correspondence between the first application and the first data channel. The second media description information and the information indicating the correspondence between the first application and the first data channel are included in the same m segment in the first SDP answer information.

For example, if the first SDP offer information further indicates the correspondence between the first QoS parameter set and the first media description information, the first SDP answer information generated by the second communication apparatus further indicates a correspondence between a second QoS parameter set and the second media description information, and the second QoS parameter set is an answer of the second communication apparatus to the first QoS parameter set. The second media description information and third indication information are included in a same m segment in the first SDP answer information. For example, the second media description information includes the second QoS parameter set. For example, the second media description information includes the fourth attribute line, and the fourth attribute line includes at least one QoS parameter in the second QoS parameter set. For example, the at least one QoS parameter includes a packet loss rate and a latency.

For example, if the first SDP offer information further indicates the correspondence between the first application and the first data channel and the correspondence between the first QoS parameter set and the first media description information, the first SDP answer information generated by the second communication apparatus further indicates the correspondence between the first application and the first data channel and a correspondence between a second QoS parameter set and the second media description information. The second media description information, the information indicating the correspondence between the first application and the first data channel, and information indicating the correspondence between the second QoS parameter set and the second media description information are included in a same m segment in the first SDP answer information.

For example, if the first SDP offer information further includes the seventh media description information, the first SDP answer information generated by the second communication apparatus further includes eighth media description information. The eighth media description information is an answer of the second communication apparatus to the seventh media description information.

If the first media description information and the seventh media description information are included in the fifth m segment in the first SDP offer information, the second media description information and the eighth media description information are included in a sixth m segment in the first SDP answer information; or if the first media description information and the seventh media description information are respectively included in the first m segment and the second m segment in the first SDP offer information, the second media description information and the eighth media description information are respectively included in a third m segment and a fourth m segment in the first SDP answer information.

For example, if the first SDP offer information further includes the seventh media description information, and indicates the correspondence between the first application and the first data channel and/or the correspondence between the first QoS parameter set and the first media description information, the first SDP answer information generated by the second communication apparatus further includes eighth media description information, and indicates the correspondence between the first application and the first data channel and/or a correspondence between a second QoS parameter set and the second media description information.

After the second communication apparatus obtains the first SDP offer information, and the first communication apparatus obtains the first SDP answer information, the first communication apparatus and the second communication apparatus may create an SCTP association, and send and/or receive media information through a data channel. For a specific procedure, refer to step S1012 to step S1016 in FIG. 10.

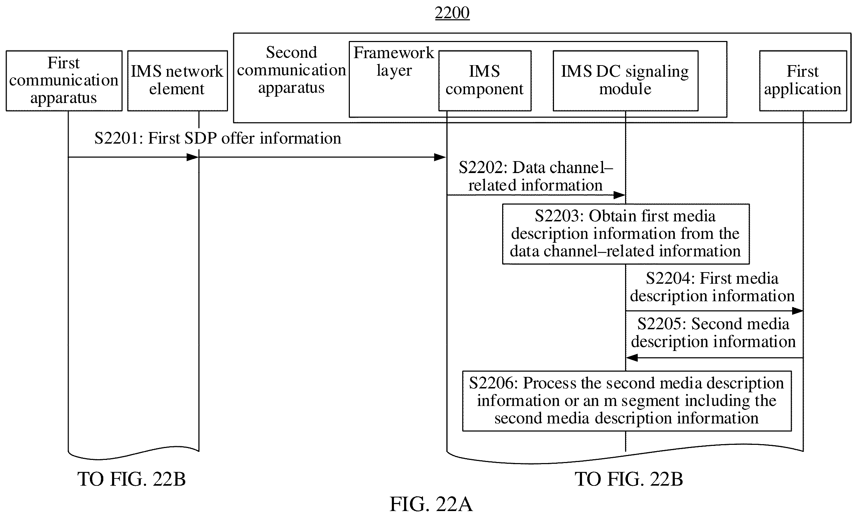

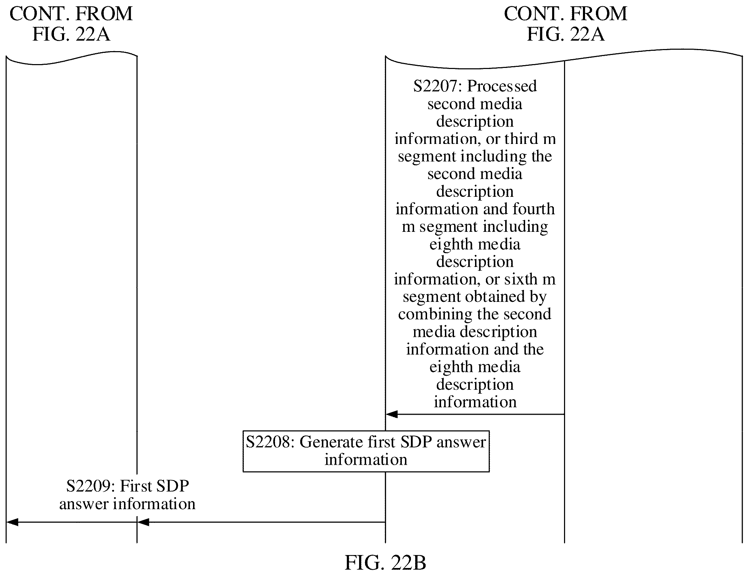

Optionally, the framework layer includes the IMS component and the IMS DC signaling module. For example, the IMS component of the framework layer receives the first SDP offer information from the first communication apparatus via the IMS network element. The IMS component sends the first SDP offer information to the IMS DC signaling module of the framework layer. The IMS DC signaling module sends the first media description information to the first application. The first application sends the second media description information to the IMS DC signaling module. The IMS DC signaling module sends the second media description information to the IMS component. The IMS component sends the first SDP answer information to the first communication apparatus via the IMS network element. The first SDP answer information includes the second media description information. For a specific example flowchart, refer to FIG. 22A and FIG. 22B.

FIG. 21A and FIG. 21B are another example flowchart of a media negotiation method 2100 according to an embodiment of this application. In the method 2100, a first communication apparatus includes a framework layer and a first application. The framework layer includes an IMS component and an IMS DC signaling module. A first application and a second application are IMS DC applications, and media description information of a data channel is referred to as an m segment.

S2101: The first application sends first media description information to the IMS DC signaling module. The first media description information is description information, offered by the first application, of a media resource of a first data channel, the first data channel is a channel used for transmission of application data generated or consumed by the first application between the first communication apparatus and a second communication apparatus, and both the IMS DC signaling module and the first application run on the first communication apparatus. For example, the first application sends the first media description information to the IMS DC signaling module by invoking an IMS DC signaling API. Correspondingly, the IMS DC signaling module receives the first media description information from the first application. Optionally, the first communication apparatus is a first terminal device, and the first terminal device is a calling terminal device.

For example, the first application triggers, by invoking a createOffer API included in a Web API layer, a JSEP implementation to generate second SDP offer information. The second SDP offer information includes the first media description information. The first application sends the second SDP offer information to the IMS DC signaling module. After the IMS DC signaling module receives the second SDP offer information from the first application, the IMS DC signaling module obtains the first media description information from the second SDP offer information. For a specific implementation in which the first application running on the first communication apparatus triggers the JSEP implementation to generate the second SDP offer information, refer to steps S1001 to S1004 in FIG. 10.

S2102: The IMS DC signaling module processes the first media description information or an m segment including the first media description information.

One IMS session may support a plurality of applications, or may support only one IMS DC application. When the IMS session supports the only one IMS DC application, and the second communication apparatus has downloaded the first application, the IMS DC signaling module does not need to indicate a correspondence between the first application and the first data channel to the second communication apparatus. When the IMS session supports the only one IMS DC application, and the second communication apparatus has not downloaded the first application, the IMS DC signaling module needs to indicate the correspondence between the first application and the first data channel to the second communication apparatus. When the IMS session supports the plurality of IMS DC applications, the IMS DC signaling module needs to indicate the correspondence between the first application and the first data channel to the second communication apparatus, so that the second communication apparatus can learn of a specific application that uses the first data channel.

Optionally, if the IMS session supports the only one IMS DC application, and the second communication apparatus has not downloaded the first application, or the IMS session supports the plurality of IMS DC applications, the IMS DC signaling module needs to indicate the correspondence between the first application and the first data channel to the second communication apparatus. The IMS DC signaling module adds a second attribute line to the m segment including the first media description information. The second attribute line includes an identifier of the first data channel and an identifier of the first application. The first media description information further includes a first attribute line, the first attribute line includes parameter information of the first data channel, and the parameter information of the first data channel includes the identifier of the first data channel. The first attribute line is an a=dcmap attribute line, and the second attribute line is an a=3gpp-req-app attribute line.

Optionally, if the IMS session supports the only one IMS DC application, and the second communication apparatus has not downloaded the first application, or the IMS session supports the plurality of IMS DC applications, the IMS DC signaling module needs to indicate the correspondence between the first application and the first data channel to the second communication apparatus. The IMS DC signaling module adds an identifier of the first application to parameter information of the first data channel included in the first media description information. Specifically, the first media description information includes a third attribute line, the third attribute line includes the parameter information of the first data channel and the identifier of the first application, and the parameter information of the first data channel includes an identifier of the first data channel. The third attribute line is an a=dcmap attribute line. For an example reflecting the correspondence between the first application and the first data channel, refer to FIG. 13 and FIG. 14.

Optionally, the first application sends a first QoS parameter set to the IMS DC signaling module. The first QoS parameter set includes at least one QoS parameter, offered by the first application, of the first data channel. Correspondingly, the IMS DC signaling module receives the first QoS parameter set from the first application. For example, the second SDP offer information further includes the first QoS parameter set. If the IMS DC signaling module receives the first QoS parameter set from the first application, the IMS DC signaling module adds the first QoS parameter set to the m segment including the first media description information. The first SDP offer information further indicates a correspondence between the first QoS parameter set and the first media description information. For example, the first media description information includes a fourth attribute line, and the fourth attribute line includes at least one QoS parameter in the first QoS parameter set. For example, the at least one QoS parameter includes a packet loss rate and a latency. For example, the fourth attribute line is an a=3gpp-qos-hint attribute line. For an example of adding the QoS parameter to the m segment, refer to FIG. 15.

Optionally, the first application sends first indication information to the IMS DC signaling module. The first indication information indicates that the first data channel uses an independent bearer. The independent bearer means that the first data channel and another data channel are not in a same SCTP association, and the another data channel is a data channel other than the first data channel. The another data channel may be a data channel that is other than the first data channel and that the first application needs to create, or may be a data channel that another application needs to create. Correspondingly, the IMS DC signaling module further receives the first indication information from the first application. If the IMS DC signaling module determines that seventh media description information already exists in the IMS component and receives the first indication information, the IMS DC signaling module determines not to combine the first media description information and the seventh media description information into a same m segment. The first media description information and the seventh media description information are respectively included in a first m segment and a second m segment in the first SDP offer information. The seventh media description information is description information of a media resource of a second data channel, and the second data channel is a channel between the first communication apparatus and the second communication apparatus or between the first communication apparatus and a third communication apparatus for transmission of application data generated or consumed by the first application or transmission of application data generated or consumed by a second application.

Optionally, if the IMS DC signaling module determines that seventh media description information already exists in the IMS component and receives the first QoS parameter set from the first application, the IMS DC signaling module determines not to combine the first media description information and the seventh media description information into a same m segment. The first media description information and the seventh media description information are respectively included in a first m segment and a second m segment in the first SDP offer information.

Optionally, if the IMS DC signaling module determines that seventh media description information already exists in the IMS component and does not receive the first indication information or the first QoS parameter set from the first application, the IMS DC signaling module determines to combine the first media description information and the seventh media description information into a same m segment. The first media description information and the seventh media description information are included in a fifth m segment in the first SDP offer information. For example, the IMS DC signaling module may add, to the m segment that already includes the seventh media description information, an a=dcmap attribute line corresponding to the first media description information and the second attribute line that includes the identifier of the first data channel and the identifier of the first application. For example, the IMS DC signaling module may add, to the m segment that includes the first media description information, an a=dcmap attribute line corresponding to the seventh media description information and the second attribute line that includes the identifier of the first data channel and the identifier of the first application.

S2103: The IMS DC signaling module sends, to the IMS component, processed first media description information, or the first m segment including the first media description information and the second m segment including the seventh media description information, or the fifth m segment obtained by combining the first media description information and the seventh media description information. Correspondingly, the IMS component receives, from the IMS DC signaling module, the processed first media description information, or the first m segment including the first media description information and the second m segment including the seventh media description information, or the fifth m segment obtained by combining the first media description information and the seventh media description information.

For example, the first SDP offer information includes the processed first media description information. For example, the first SDP offer information includes the first media description information, the processed first media description information includes the third attribute line, the third attribute line includes the parameter information of the first data channel and the identifier of the first application, and the parameter information of the first data channel includes the identifier of the first data channel. The third attribute line is an a=dcmap attribute line.

For another example, the processed first media description information includes the first attribute line and the second attribute line. The first attribute line includes the parameter information of the first data channel, and the parameter information of the first data channel includes the identifier of the first data channel. The second attribute line includes the identifier of the first data channel and the identifier of the first application. For another example, the processed first media description information includes the first QoS parameter set, and indicates the correspondence between the first QoS parameter set and the first media description information.

S2104: The IMS component generates the first SDP offer information. The first SDP offer information includes the processed first media description information, or the first m segment including the first media description information and the second m segment including the seventh media description information, or the fifth m segment obtained by combining the first media description information and the seventh media description information. Specifically, the IMS component generates the first SDP offer information based on the processed first media description information, or the first m segment including the first media description information and the second m segment including the seventh media description information, or the fifth m segment obtained by combining the first media description information and the seventh media description information.

Optionally, the first SDP offer information further includes third media description information and/or fourth media description information. The third media description information is description information that is of a media resource of an audio channel and that is offered by the framework layer, and the audio channel is used for transmission of audio data of a call service of the first communication apparatus. The fourth media description information is description information, offered by the framework layer, of a media resource of a video channel for transmission of video data of the call service of the first communication apparatus.

S2105: The IMS component sends the first SDP offer information to the second communication apparatus via an IMS network element. Correspondingly, the second communication apparatus receives the first SDP offer information from the IMS component via the IMS network element.

Optionally, the IMS network element includes a P-CSCF network element. The IMS network element is one or more IMS network elements in an IMS network, and a 1^{st} IMS network element that interacts with the IMS component in the IMS network is the P-CSCF network element. For example, the IMS component sends the first SDP offer information to the second communication apparatus via the one or more IMS network elements in the IMS network, and the second communication apparatus receives the first SDP offer information from the IMS component via the one or more IMS network elements in the IMS network.

S2106: The second communication apparatus generates first SDP answer information based on the first SDP offer information.

For example, if the first SDP offer information includes the processed first media description information, the first SDP answer information generated by the second communication apparatus further includes second media description information. The second media description information is an answer of the second communication apparatus to the first media description information.

For example, if the first SDP offer information includes the first media description information, and indicates the correspondence between the first application and the first data channel, the first SDP answer information generated by the second communication apparatus includes second media description information, and indicates the correspondence between the first application and the first data channel.

For example, if the first SDP offer information includes the first media description information, and indicates the correspondence between the first QoS parameter set and the first media description information, the first SDP answer information generated by the second communication apparatus includes second media description information, and indicates a correspondence between a second QoS parameter set and the second media description information. The second QoS parameter set is an answer of the second communication apparatus to the first QoS parameter set.

For example, if the first SDP offer information includes the first media description information, and indicates the correspondence between the first application and the first data channel and/or the correspondence between the first QoS parameter set and the first media description information, the first SDP answer information generated by the second communication apparatus includes second media description information, and indicates the correspondence between the first application and the first data channel and a correspondence between a second QoS parameter set and the second media description information.

For example, if the first SDP offer information includes the first media description information and the seventh media description information, the first SDP answer information generated by the second communication apparatus includes second media description information and eighth media description information. The eighth media description information is an answer of the second communication apparatus to the seventh media description information. When the second media description information and the eighth media description information are respectively included in a third m segment and a fourth m segment in the first SDP answer information, it may be understood that the second media description information and the eighth media description information are included in a same m segment in the first SDP offer information after being combined by the second communication apparatus; or when the second media description information and the eighth media description information are included in a sixth m segment in the first SDP answer information, it may be understood that the eighth media description information and the second media description information are included in different m segments in the first SDP answer information.

If the first media description information and the seventh media description information are included in the fifth m segment in the first SDP offer information, the second media description information and the eighth media description information are included in the sixth m segment in the first SDP answer information; or if the first media description information and the seventh media description information are respectively included in the first m segment and the second m segment in the first SDP offer information, the second media description information and the eighth media description information are respectively included in the third m segment and the fourth m segment in the first SDP answer information.

For example, if the first SDP offer information includes the first media description information, the seventh media description information, the first indication information, and/or second indication information, the first SDP answer information generated by the second communication apparatus includes the second media description information and the eighth media description information, and indicates the correspondence between the first application and the first data channel and/or the correspondence between the second QoS parameter set and the second media description information.

S2107: The second communication apparatus sends the first SDP answer information to the IMS component via the IMS network element. Correspondingly, the IMS component receives the first SDP answer information from the second communication apparatus via the IMS network element.

S2108: The IMS component obtains data channel-related information from the first SDP answer information, and sends the data channel-related information to the IMS DC signaling module. The data channel-related information includes the second media description information, or the second media description information and the eighth media description information. Correspondingly, the IMS DC signaling module receives the data channel-related information from the IMS component.

When the data channel-related information includes the second media description information and the eighth media description information, the second media description information and the eighth media description information may be in the same m segment after being combined by the second communication apparatus, or the second media description information and the eighth media description information may be in the different m segments.

S2109: The IMS DC signaling module obtains the second media description information from the data channel-related information.

For example, if the data channel-related information includes the second media description information and the eighth media description information, and the second media description information and the eighth media description information are in the same m segment after being combined by the second communication apparatus, the IMS DC signaling module splits the combined second media description information and eighth media description information, to obtain the second media description information. For a specific example of splitting media description information of different data channels, refer to FIG. 19.

For example, if the data channel-related information includes the second media description information and the eighth media description information, and the second media description information and the eighth media description information are in the different m segments, the IMS DC signaling module directly obtains the second media description information from the data channel-related information.

S2110: The IMS DC signaling module sends the second media description information to the first application. Correspondingly, the first application receives the second media description information from the IMS DC signaling module.

After the second communication apparatus obtains the first SDP offer information, and the first communication apparatus obtains the first SDP answer information, the first communication apparatus and the second communication apparatus may create an SCTP association, and send and/or receive media information through the data channel. For a specific procedure, refer to step S1012 to step S1016 in FIG. 10.

FIG. 22A and FIG. 22B are another example flowchart of a media negotiation method 2200 according to an embodiment of this application. In the method 2200, a second communication apparatus includes a framework layer and a first application. The framework layer includes an IMS component and an IMS DC signaling module. A first application and a second application are IMS DC applications, and media description information of a data channel is referred to as an m segment.

S2201: A first communication apparatus sends first SDP offer information to the IMS component via an IMS network element. The first SDP offer information includes first media description information. The first media description information is description information of a media resource of a first data channel, the first data channel is a channel used for transmission of application data generated or consumed by a first application between the first communication apparatus and the second communication apparatus, and the IMS component runs on the second communication apparatus. Optionally, the first application also runs on the second communication apparatus. Correspondingly, the IMS component receives the first SDP offer information from the first communication apparatus via the IMS network element.

Optionally, the first communication apparatus is a first terminal device, and the first terminal device is a calling terminal device. The second communication apparatus is a second terminal device or a server corresponding to the first application, and the second terminal device or the server corresponding to the first application is a called terminal device.

Optionally, the IMS network element includes a P-CSCF network element. The IMS network element is one or more IMS network elements in an IMS network, and a 1^{st} IMS network element that interacts with the first communication apparatus in the IMS network is the P-CSCF network element. For example, the first communication apparatus sends the first SDP offer information to the IMS component via the one or more IMS network elements in the IMS network, and the IMS component receives the first SDP offer information from the first communication apparatus via the one or more IMS network elements in the IMS network.

For example, the first SDP offer information further includes third media description information and/or fourth media description information. The third media description information is description information, offered by the first communication apparatus, of a media resource of an audio channel for transmission of audio data of a call service of the first communication apparatus. The fourth media description information is description information, offered by the first communication apparatus, of a media resource of a video channel for transmission of video data of the call service of the first communication apparatus.

Optionally, the first SDP offer information indicates a correspondence between the first application and the first data channel. For example, the first media description information includes a first attribute line and a second attribute line. The first attribute line includes parameter information of the first data channel, and the parameter information of the first data channel includes an identifier of the first data channel. The second attribute line includes the identifier of the first data channel and an identifier of the first application. The first attribute line is an a=dcmap attribute line, and the second attribute line is an a=3gpp-req-app attribute line. For example, the first media description information includes a third attribute line. The third attribute line includes parameter information of the first data channel and an identifier of the first application, and the parameter information of the first data channel includes an identifier of the first data channel. The third attribute line is an a=dcmap attribute line.

Optionally, the first SDP offer information further indicates a correspondence between a first QoS parameter set and the first media description information. For example, the first media description information includes the first QoS parameter set. For example, the first media description information includes a fourth attribute line, and the fourth attribute line includes at least one QoS parameter in the first QoS parameter set. For example, the fourth attribute line is an a=3gpp-qos-hint attribute line. For example, the fourth attribute line is an a=3gpp-qos-hint attribute line. For example, the at least one QoS parameter includes a packet loss rate and a latency.

For example, the first SDP offer information further includes seventh media description information. The seventh media description information is description information of a media resource of a second data channel, and the second data channel is a channel between the first communication apparatus and the second communication apparatus or between the first communication apparatus and a third communication apparatus for transmission of the application data generated or consumed by the first application or transmission of application data generated or consumed by a second application. The first media description information and the seventh media description information are respectively included in a first m segment and a second m segment in the first SDP offer information. It may be understood that the first media description information and the seventh media description information are included in different m segments in the first SDP offer information. Alternatively, the first media description information and the seventh media description information are included in a fifth m segment in the first SDP offer information. It may be understood that the first media description information and the seventh media description information are included in a same m segment in the first SDP offer information.

S2202: The IMS component obtains data channel-related information from the first SDP offer information, and sends the data channel-related information to the IMS DC signaling module. The data channel-related information includes the first media description information, or the first media description information and the seventh media description information. Correspondingly, the IMS DC signaling module receives the data channel-related information from the IMS component.

When the data channel-related information includes the first media description information and the seventh media description information, the first media description information and the seventh media description information may be in the same m segment after being combined by the first communication apparatus, or the first media description information and the seventh media description information may be in the different m segments.

S2203: The IMS DC signaling module obtains the first media description information from the data channel-related information.

For example, if the data channel-related information includes the first media description information and the seventh media description information, and the first media description information and the seventh media description information are in the same m segment after being combined by the first communication apparatus, the IMS DC signaling module splits the combined first media description information and seventh media description information, to obtain the first media description information.

For example, if the data channel-related information includes the first media description information and the seventh media description information, and the first media description information and the seventh media description information are in the different m segments, the IMS DC signaling module directly obtains the first media description information from the data channel-related information. S2204: The IMS DC signaling module sends the first media description information to the first application. Correspondingly, the first application receives the first media description information from the IMS DC signaling module.

For example, if the second communication apparatus has not downloaded the first application when the IMS component receives the first SDP offer information, the second communication apparatus downloads the first application based on first indication information included in the first SDP offer information. After the second communication apparatus downloads the first application, the IMS DC signaling module sends the first media description information to the first application. For example, if the second communication apparatus has downloaded the first application when the IMS component receives the first SDP offer information, the IMS DC signaling module directly sends the first media description information to the first application.

S2205: The first application sends second media description information to the IMS DC signaling module. The second media description information is an answer of the first application running on the second communication apparatus to the first media description information. Alternatively, the second media description information may be understood as an answer of the second communication apparatus to the first media description information. For example, the first application triggers, based on the first media description information and by invoking a createOffer API included in a Web API layer, a JSEP implementation to generate the second media description information. The first application sends the second media description information to the IMS DC signaling module. For example, the first application sends the second media description information to the IMS DC signaling module by invoking an IMS DC signaling API. Correspondingly, the IMS DC signaling module receives the second media description information from the first application.

For example, the first application triggers, based on the first media description information and by invoking a createOffer API included in a Web API layer, a JSEP implementation to generate second SDP answer information. The second SDP answer information includes the second media description information. The first application sends the second SDP answer information to the IMS DC signaling module. After the IMS DC signaling module receives the second SDP answer information from the first application, the IMS DC signaling module obtains the second media description information from the second SDP answer information. For a specific implementation in which the first application running on the second communication apparatus triggers the JSEP implementation to generate the second SDP answer information, refer to steps S1006 to S1009 in FIG. 10.

S2206: The IMS DC signaling module processes the second media description information or an m segment including the second media description information.

Optionally, if the first media description information obtained by the IMS DC signaling module includes a second attribute line, the IMS DC signaling module adds the second attribute line to the m segment including the second media description information. The second attribute line includes the identifier of the first data channel and the identifier of the first application.

Optionally, if the first media description information obtained by the IMS DC signaling module includes a third attribute line, the IMS DC signaling module adds the identifier of the first application to the parameter information of the first data channel included in the second media description information. Specifically, the first media description information includes the third attribute line, the third attribute line includes the parameter information of the first data channel and the identifier of the first application, and the parameter information of the first data channel includes the identifier of the first data channel. The third attribute line is an a=dcmap attribute line.

Optionally, if the first media description information obtained by the IMS DC signaling module includes the first QoS parameter set, the IMS DC signaling module adds a second QoS parameter set to the m segment including the second media description information. The second QoS parameter set is an answer of the second communication apparatus to the first QoS parameter set. For example, the first media description information includes a fourth attribute line, and the fourth attribute line includes at least one QoS parameter in the second QoS parameter set. For example, the at least one QoS parameter includes a packet loss rate and a latency. For example, the fourth attribute line is an a=3gpp-qos-hint attribute line.

Optionally, if the data channel-related information that is received by the IMS DC signaling module from the IMS component includes the first media description information and the seventh media description information, and the first media description information and the seventh media description information are included in the fifth m segment in the first SDP offer information (the first media description information and the seventh media description information are in the same m segment after being combined by the first communication apparatus), the IMS DC signaling module combines the second media description information and eighth media description information into a same m segment. The second media description information and the eighth media description information are included in a sixth m segment in the first SDP answer information. The eighth media description information is an answer of the second communication apparatus to the seventh media description information. For example, the IMS DC signaling module may add, to the m segment that already includes the second media description information, an a=dcmap attribute line corresponding to the eighth media description information and the second attribute line that includes the identifier of the first data channel and the identifier of the first application.

Optionally, if the data channel-related information that is received by the IMS DC signaling module from the IMS component includes the first media description information and the seventh media description information, and the first media description information and the seventh media description information are respectively included in the first m segment and the second m segment in the first SDP offer information (the first media description information and the seventh media description information are in the different m segments), the IMS DC signaling module does not combine the second media description information and eighth media description information into a same m segment. The second media description information and the eighth media description information are respectively included in a third m segment and a fourth m segment in the first SDP answer information. The eighth media description information is an answer of the second communication apparatus to the seventh media description information.

S2207: The IMS DC signaling module sends, to the IMS component, processed second media description information, or the third m segment including the second media description information and the fourth m segment including the eighth media description information, or the sixth m segment obtained by combining the second media description information and the eighth media description information. Correspondingly, the IMS component receives, from the IMS DC signaling module, the processed second media description information, or the third m segment including the second media description information and the fourth m segment including the eighth media description information, or the sixth m segment obtained by combining the second media description information and the eighth media description information.

For example, the first SDP answer information includes the processed second media description information. For example, the first SDP answer information includes the second media description information, the processed second media description information includes the third attribute line, the third attribute line includes the parameter information of the first data channel and the identifier of the first application, and the parameter information of the first data channel includes the identifier of the first data channel. The third attribute line is an a=dcmap attribute line.

For another example, the processed second media description information includes the first attribute line and the second attribute line. The first attribute line includes the parameter information of the first data channel, and the parameter information of the first data channel includes the identifier of the first data channel. The second attribute line includes the identifier of the first data channel and the identifier of the first application. For another example, the processed second media description information includes the second QoS parameter set, and indicates the correspondence between the second QoS parameter set and the second media description information.

S2208: The IMS component generates the first SDP answer information. The first SDP answer information includes the processed second media description information, or the m segment including the second media description information and the m segment including the eighth media description information, or the m segment obtained by combining the second media description information and the eighth media description information.

The first SDP answer information further includes fifth media description information and/or sixth media description information. The fifth media description information is an answer of the second communication apparatus to the third media description information, and the sixth media description information is an answer of the second communication apparatus to the fourth media description information.

S2209: The IMS component sends the first SDP answer information to the first communication apparatus via the IMS network element. Correspondingly, the first communication apparatus receives the first SDP answer information from the IMS component via the IMS network element.

Optionally, the IMS network element includes the P-CSCF network element. The IMS network element is one or more IMS network elements in the IMS network, and the 1^{st} IMS network element that interacts with the IMS component in the IMS network is the P-CSCF network element. For example, the IMS component sends the first SDP answer information to the first communication apparatus via the one or more IMS network elements in the IMS network, and the first communication apparatus receives the first SDP answer information from the IMS component via the one or more IMS network elements in the IMS network.

After the second communication apparatus obtains the first SDP offer information, and the first communication apparatus obtains the first SDP answer information, the first communication apparatus and the second communication apparatus may create an SCTP association, and send and/or receive media information through the data channel. For a specific procedure, refer to step S1012 to step S1016 in FIG. 10.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of the software and the hardware. It may be understood that technical features described in the foregoing method embodiments are also applicable to the following apparatus embodiments. Therefore, for content that is not described in detail, refer to the foregoing method embodiments. For brevity, details are not described herein again.

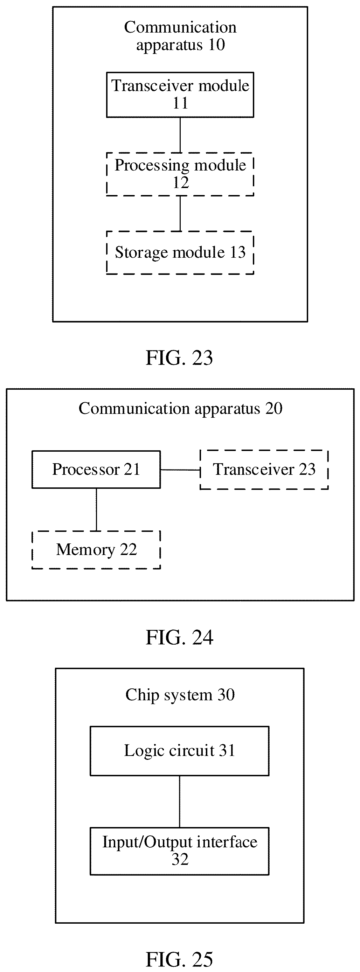

FIG. 23 is a schematic block diagram of a communication apparatus 10 according to an embodiment of this application. The apparatus 10 includes a transceiver module 11 and/or a processing module 12. The transceiver module 11 may implement a corresponding communication function. The processing module 12 is configured to perform data processing. In other words, the transceiver module 11 is configured to perform receiving and sending related operations. The processing module 12 is configured to perform another operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements an action of a device or a network element in the foregoing method embodiments.

In a design, the apparatus 10 may correspond to the framework layer (for example, the framework layer in FIG. 12 or FIG. 20) in the foregoing method embodiments, or a component (for example, a chip) of the framework layer.

The apparatus 10 may implement a corresponding step or procedure performed by the framework layer in the foregoing method embodiments. The transceiver module 11 may be configured to perform receiving and sending related operations of the framework layer in the foregoing method embodiments. The processing module 12 may be configured to perform a processing related operation of the framework layer in the foregoing method embodiments.

In a possible implementation, the apparatus 10 may implement the step or procedure performed by the framework layer in the method 1200 in the foregoing method embodiments. For example, the transceiver module 11 is configured to receive first media description information from a first application. The first media description information is description information, offered by the first application, of a media resource of a first data channel, the first data channel is a channel between a first communication apparatus and a second communication apparatus for transmission of application data generated or consumed by the first application, and both the framework layer and the first application run on the first communication apparatus.

In a possible implementation, the apparatus 10 may implement the step or procedure performed by the framework layer in the method 2000 in the foregoing method embodiments. For example, the transceiver module 11 is configured to receive first SDP offer information from a first communication apparatus. The first SDP offer information includes first media description information, the first media description information is description information, offered by the first application, of a media resource of a first data channel, the first data channel is a channel used for transmission of application data generated or consumed by the first application between the first communication apparatus and a second communication apparatus, the first application runs on the first communication apparatus and the second communication apparatus, and the framework layer runs on the second communication apparatus.

It may be understood that a specific process in which the modules perform the foregoing corresponding steps is already described in detail in the foregoing method embodiments. For brevity, details are not described herein again.

It may be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another proper component that supports the described function. In an optional example, a person skilled in the art may understand that the apparatus 10 may be specifically the terminal device in the foregoing embodiments, and may be configured to perform the procedures and/or steps corresponding to the terminal device in the foregoing method embodiments; or the apparatus 10 may be specifically the network device in the foregoing embodiments, and may be configured to perform the procedures and/or steps corresponding to the network device in the foregoing method embodiments. To avoid repetition, details are not described herein again.

The apparatus 10 in the foregoing solutions has a function of implementing the corresponding step performed by the framework layer in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to separately perform receiving and sending operations and processing related operations in the method embodiments.

In addition, the transceiver module 11 may alternatively be a transceiver circuit (for example, may include a receiving circuit and a sending circuit), and the processing module may be a processing circuit.

FIG. 24 is a diagram of another communication apparatus 20 according to an embodiment of this application. The apparatus 20 includes a processor 21. The processor 21 is configured to: execute a computer program or instructions stored in a memory 22, or read data/signaling stored in the memory 22, to perform the method in the foregoing method embodiments. Optionally, there are one or more processors 21.

Optionally, as shown in FIG. 24, the apparatus 20 further includes a memory 22, and the memory 22 is configured to store the computer program or the instructions and/or data. The memory 22 may be integrated with the processor 21, or may be disposed separately. Optionally, there are one or more memories 22.

Optionally, as shown in FIG. 24, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement an operation performed by the framework layer in the foregoing method embodiments.

It may be understood that the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include, but is not limited to, these memories and any other memory of a suitable type.

FIG. 25 is a diagram of a chip system 30 according to an embodiment of this application. The chip system 30 (or referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the method and function in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement an operation performed by a network functions virtualization orchestrator in the foregoing method embodiments.

For example, the logic circuit 31 is configured to implement a processing-related operation performed by the framework layer in the foregoing method embodiments, for example, a processing-related operation performed by the framework layer in the embodiment shown in FIG. 12 or FIG. 20. The input/output interface 32 is configured to implement a sending-related operation and/or a receiving-related operation performed by the first terminal device in the foregoing method embodiment, for example, a sending-related operation and/or a receiving-related operation performed by the framework layer in the embodiment shown in FIG. 12 or FIG. 20.

An embodiment of this application further provides a computer-readable storage medium. The computer-readable storage medium stores computer instructions for implementing the method performed by the device in the foregoing method embodiments.

An embodiment of this application further provides a computer program product, including instructions. When the instructions are executed by a computer, the method performed by the device in the foregoing method embodiments is implemented.

An embodiment of this application further provides a communication system, including the foregoing first communication apparatus and second communication apparatus. Optionally, the communication system further includes the foregoing third communication apparatus.

For explanations and beneficial effects of related content in any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiments are merely examples. For example, the unit division is merely logical function division, and may be other division during actual implementation. For example, multiple units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A media negotiation method, comprising:
receiving first media description information from a first application, wherein the first media description information is description information, offered by the first application, of a media resource of a first data channel, the first data channel is a channel between a first communication apparatus and a second communication apparatus for transmission of application data generated or consumed by the first application, and the first application runs on the first communication apparatus;
sending first SDP offer information to the second communication apparatus via an IMS network element, wherein the first SDP offer information comprises the first media description information;
receiving first SDP answer information from the second communication apparatus via the IMS network element, wherein the first SDP answer information comprises second media description information, and the second media description information is an answer to the first media description information; and
sending the second media description information to the first application.

2. The method according to claim 1, wherein
the first SDP offer information further comprises third media description information and/or fourth media description information; and
the first SDP answer information further comprises fifth media description information and/or sixth media description information, wherein
the third media description information is description information, offered by the first communication apparatus, of a media resource of an audio channel for transmission of audio data of a call service of the first communication apparatus, the fourth media description information is description information, offered by the first communication apparatus, of a media resource of a video channel for transmission of video data of the call service of the first communication apparatus, the fifth media description information is an answer to the fifth media description information, and the sixth media description information is an answer to the sixth media description information.

3. The method according to claim 1 or 2, wherein the method further comprises:
the first SDP offer information and the first SDP answer information each indicate a correspondence between the first application and the first data channel.

4. The method according to claim 3, wherein
the first media description information and the second media description information each comprise a first attribute line and a second attribute line, the first attribute line comprises parameter information of the first data channel, the parameter information comprises an identifier of the first data channel, and the second attribute line comprises an identifier of the first application and the identifier of the first data channel; or
the first media description information and the second media description information each comprise a third attribute line, the third attribute line comprises parameter information of the first data channel and an identifier of the first application, and the parameter information comprises an identifier of the first data channel.

5. The method according to any one of claims 1 to 4, wherein the method further comprises:
receiving a first quality of service QoS parameter set from the first application, wherein the first QoS parameter set comprises at least one QoS parameter, offered by the first application, of the first data channel;
the first SDP offer information further indicates a correspondence between the first QoS parameter set and the first media description information; and
the first SDP answer information further indicates a correspondence between a second QoS parameter set and the second media description information, and the second QoS parameter set is an answer of the second communication apparatus to the first QoS parameter set.

6. The method according to claim 5, wherein
the first media description information comprises the first QoS parameter set, and the second media description information comprises the second QoS parameter set.

7. The method according to claim 5 or 6, wherein
the at least one QoS parameter comprises a packet loss rate and a latency.

8. The method according to any one of claims 1 to 7, wherein the method further comprises:
receiving first indication information from the first application, wherein the first indication information indicates that the first data channel uses an independent bearer.

9. The method according to any one of claims 5 to 8, wherein
the first media description information and seventh media description information are respectively comprised in a first m segment and a second m segment in the first SDP offer information, the seventh media description information is description information of a media resource of a second data channel, and the second data channel is a channel between the first communication apparatus and the second communication apparatus or between the first communication apparatus and a third communication apparatus for transmission of application data generated or consumed by the first application or a second application; and
the second media description information and eighth media description information are respectively comprised in a third m segment and a fourth m segment in the first SDP answer information, and the eighth media description information is an answer to the seventh media description information.

10. The method according to any one of claims 1 to 4, wherein
the first media description information and seventh media description information are comprised in a fifth m segment in the first SDP offer information, the seventh media description information is description information of a media resource of a second data channel, and the second data channel is a channel between the first communication apparatus and the second communication apparatus or between the first communication apparatus and a third communication apparatus for transmission of application data generated or consumed by the first application or a second application; and
the second media description information and eighth media description information are comprised in a sixth m segment in the first SDP answer information, and the eighth media description information is an answer to the seventh media description information.

11. The method according to any one of claims 1 to 10, wherein
the first communication apparatus is a first terminal device; and
the second communication apparatus is a second terminal device or a server corresponding to the first application.

12. The method according to any one of claims 1 to 11, wherein
the IMS network element comprises a P-CSCF network element.

13. A media negotiation method, comprising:
receiving first SDP offer information from a first communication apparatus via an IMS network element, wherein the first SDP offer information comprises first media description information, the first media description information is description information of a media resource of a first data channel, and the first data channel is a channel used for transmission of application data generated or consumed by the first application between the first communication apparatus and a second communication apparatus;
sending the first media description information to the first application, wherein the first application runs on the second communication apparatus;
receiving second media description information from the first application, wherein the second media description information is an answer of the first application to the first media description information; and
sending first SDP answer information to the first communication apparatus via the IMS network element, wherein the first SDP answer information comprises the second media description information.

14. The method according to claim 13, wherein
the first SDP offer information further comprises third media description information and/or fourth media description information; and
the first SDP answer information further comprises fifth media description information and/or sixth media description information, wherein
the third media description information is description information, offered by the first communication apparatus, of a media resource of an audio channel for transmission of audio data of a call service of the first communication apparatus, the fourth media description information is description information, offered by the first communication apparatus, of a media resource of a video channel for transmission of video data of the call service of the first communication apparatus, the fifth media description information is an answer to the fifth media description information, and the sixth media description information is an answer to the sixth media description information.

15. The method according to claim 13 or 14, wherein the method further comprises:
the first SDP offer information and the first SDP answer information each indicate a correspondence between the first application and the first data channel.

16. The method according to claim 15, wherein
the first media description information and the second media description information each comprise a first attribute line and a second attribute line, the first attribute line comprises parameter information of the first data channel, the parameter information comprises an identifier of the first data channel, and the second attribute line comprises an identifier of the first application and the identifier of the first data channel; or
the first media description information and the second media description information each comprise a third attribute line, the third attribute line comprises parameter information of the first data channel and an identifier of the first application, and the parameter information comprises an identifier of the first data channel.

17. The method according to any one of claims 13 to 16, wherein
the first SDP offer information further indicates a correspondence between a first QoS parameter set and the first media description information, and the first QoS parameter set comprises at least one QoS parameter, offered by the first application, of the first data channel; and
the first SDP answer information further indicates a correspondence between a second QoS parameter set and the second media description information, and the second QoS parameter set is an answer of the second communication apparatus to the first QoS parameter set.

18. The method according to claim 17, wherein
the first media description information comprises the first QoS parameter set, and the second media description information comprises the second QoS parameter set.

19. The method according to claim 17 or 18, wherein
the at least one QoS parameter comprises a packet loss rate and a latency.

20. The method according to any one of claims 17 to 19, wherein
the first media description information and seventh media description information are respectively comprised in a first m segment and a second m segment in the first SDP offer information, the seventh media description information is description information of a media resource of a second data channel, and the second data channel is a channel between the first communication apparatus and the second communication apparatus or between the first communication apparatus and a third communication apparatus for transmission of application data generated or consumed by the first application or a second application; and
the second media description information and eighth media description information are respectively comprised in a third m segment and a fourth m segment in the first SDP answer information, and the eighth media description information is an answer to the seventh media description information.

21. The method according to any one of claims 13 to 16, wherein
the first media description information and seventh media description information are comprised in a fifth m segment in the first SDP offer information, the seventh media description information is description information of a media resource of a second data channel, and the second data channel is a channel between the first communication apparatus and the second communication apparatus or between the first communication apparatus and a third communication apparatus for transmission of application data generated or consumed by the first application or a second application; and
the second media description information and eighth media description information are comprised in a sixth m segment in the first SDP answer information, and the eighth media description information is an answer to the seventh media description information.

22. The method according to any one of claims 13 to 21, wherein
the first communication apparatus is a first terminal device; and
the second communication apparatus is a second terminal device or a server corresponding to the first application.

23. The method according to any one of claims 13 to 22, wherein
the IMS network element comprises a P-CSCF network element.

24. A communication apparatus, wherein the apparatus comprises: a module configured to perform the method according to any one of claims 1 to 12, or a module configured to perform the method according to any one of claims 13 to 23.

25. A communication apparatus, comprising:
a processor, configured to execute a computer program stored in a memory, to cause the apparatus to perform the method according to any one of claims 1 to 12, or cause the apparatus to perform the method according to any one of claims 13 to 23.

26. A computer program product, wherein the computer program product comprises instructions used to perform the method according to any one of claims 1 to 12, or the computer program product comprises instructions used to perform the method according to any one of claims 13 to 23.

27. A computer-readable storage medium, wherein the computer-readable storage medium stores a computer program, and when the computer program is run on a computer, the computer is caused to perform the method according to any one of claims 1 to 12, or the computer is caused to perform the method according to any one of claims 13 to 23.

28. A communication system, comprising a first communication apparatus and a second communication apparatus, wherein
the first communication apparatus is configured to perform the method according to any one of claims 1 to 12, and the second communication apparatus is configured to perform the method according to any one of claims 13 to 23.
